(19)

Europäisches
Patentamt
European
Patent Office
Office européen
des brevets

(11) **EP 2 956 514 B1**

(12) **EUROPEAN PATENT SPECIFICATION**

(45) Date of publication and mention
of the grant of the patent:
**23.05.2018 Bulletin 2018/21**

(21) Application number: **13811544.9**

(22) Date of filing: **20.12.2013**

(51) Int Cl.:
*C09D 11/02* (2014.01)        *B41M 1/10* (2006.01)
*B41M 3/14* (2006.01)         *C09D 11/10* (2014.01)
*B41C 1/04* (2006.01)

(86) International application number:
**PCT/EP2013/077566**

(87) International publication number:
**WO 2014/124718 (21.08.2014 Gazette 2014/34)**

(54) **METHOD FOR PRINTING MULTI-CHARACTERISTIC INTAGLIO FEATURES**

VERFAHREN ZUM DRUCKEN VON TIEFDRUCKMERKMALEN MIT MEHREREN KENNZEICHEN

PROCÉDÉ D'IMPRESSION D'IMPRIMÉ EN TAILLE DOUCE À CARACTÉRISTIQUES MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.02.2013 EP 13155146**

(43) Date of publication of application:
**23.12.2015 Bulletin 2015/52**

(73) Proprietor: **SICPA HOLDING SA
1008 Prilly (CH)**

(72) Inventors:
• **LEFEBVRE, Olivier
CH-1442 Montagny-près-Yverdon (CH)**

• **MAGNIN, Patrick
F-74500 Maxilly-sur-Leman (FR)**

(74) Representative: **Hepp Wenger Ryffel AG
Friedtalweg 5
9500 Wil (CH)**

(56) References cited:
**EP-A1- 1 186 638**        **EP-A1- 1 790 701**
**WO-A1-2005/090090**      **US-A- 4 565 576**

Remarks:
The file contains technical information submitted after
the application was filed and not included in this
specification

**Description**

**FIELD OF THE INVENTION**

The present invention relates to the field of security documents and their protection against counterfeit and illegal reproduction. In particular the present invention relates to the field of intaglio ink compositions and processes combining dyes and/or pigments of different sizes and different properties, and intaglio plates with various shaped furrow elements.

**BACKGROUND OF THE INVENTION**

During conventional intaglio printing processes, a rotating engraved steel cylinder carrying a plate engraved with a pattern or image to be printed is supplied with ink by one or by a plurality of selective inking cylinder(s) (or chablon cylinder), each selective inking cylinder being inked in at least one corresponding color to form multi-shade features. Furthermore the intaglio printing process involves a wiping off of any ink excess present on the surface of the intaglio printing plate. The wiping off process is carried out using a paper or a tissue wiping system ("calico"), or a polymeric roll wiping system (wiping cylinder). Subsequently to the wiping steps, the inked intaglio plate is brought into contact with a substrate, e.g. a paper, a composite or a plastic material in sheet form or web form, and the ink is transferred under pressure from the engravings of the intaglio printing plate onto the substrate to be printed forming a thick printing pattern on the substrate.

Intaglio printing delivers the most consistent and high quality printing of fine lines. It can be considered as the printing technology of choice for generating fine designs in the field of security documents, in particular banknotes and stamps. One of the distinguishing features of the intaglio printing process is that intaglio reliefs may be varied from a few micrometers to several tens of micrometers by using correspondingly shallow or respectively deep recesses of the intaglio printing plate. Intaglio relief resulting form the intaglio ink layer thickness is emphasized by the embossing of the substrate, said embossing being produced by the pressure during the ink transfer. The tactility resulting from intaglio printing gives the banknotes their typical and recognizable touch feeling.

The so obtained reliefs of intaglio element and the thickness of intaglio ink layer are advantageously used to produce different designs and security elements.

US 7 686 341 B2 discloses a visually detectable security element comprising a half-tone blind embossing, said element having been created by using an inkless intaglio plate comprising a plurality of different embossing heights. Areas representing the darkest grey levels are produced by the deepest engravings, and reversely, the shallowest engravings produced the areas with the lighter grey levels.

EP 1 790 701 B2 discloses an intaglio ink for security application comprising an IR absorbing material exhibiting a diffuse reflectance lightness value (L*) higher than 70. The specific moderate absorption of the IR-absorbing material is compensated by the sufficiently thick intaglio ink layer. Security features printed with the ink may be used as machine readable security features

WO 2010/115 986 A2 discloses magnetic intaglio ink formulations having a clean shade such as to allow a large gamut of colors, in particular clear shades. The disclosed intaglio ink formulations are also used to print machine readable security features.

WO 2005/090090 A1 discloses the use of intaglio plates comprising asymmetrical furrow elements to produce a transient image. The furrow elements have an asymmetrical shape with opposite side walls of different average slope. Different examples of various shape furrow elements comprising various groove types, including grooves having e.g. a U and a V shape, are also disclosed. Traditionally, the manufacture of intaglio plate is a long and complex process, which begins with the hand engraving of a steel or copper plate. Engravings of different forms are created such as e.g. dots, lines, conical recesses, pyramidal recesses or furrow-shaped elements. The production of intaglio plate carrying asymmetrical furrow elements as disclosed in WO 2005/090090 A1 requires highly precise engraving techniques.

WO 2003/103962 A1 discloses a method of manufacturing an intaglio plate wherein a non-engraved plate is submitted to a programmed engraving process by a computer controlled engraving tool, namely a laser-engraving tool. This method allows a very precise engraving of the intaglio plate at a precision of the pixel-level. EP 2 119 527 A1 also discloses a method for the manufacture of intaglio plate by laser-engraving.

Printed intaglio elements conveying various lightness effects may be produced by varying the density of the engravings in the intaglio plate. Typically, an intaglio element produced with a design comprising a higher density of the intaglio lines conveys a darker shade than a corresponding intaglio element produced with a design comprising a lower density of the intaglio lines.

Intaglio printed elements may be easily printed with multiple colors by using selective inking cylinders. Each selective inking cylinder is inked with at least one corresponding color. The selective inking cylinders subsequently transfer each ink to the intaglio printing plate or, alternatively, to a collecting cylinder followed by the intaglio printing plate cylinder. This process is well known in the art. However during the transfer between the cylinders and/or the substrate, ink contamination may occur between the different colors, in particular if the different colors correspond to entangled zones of the intaglio feature. Alternatively, multitone inks are known to those skilled in the art as a means to produce with a single ink composition multicolored features. The term *"multitone inks"* designate ink compositions which lead, when applied and hardened on a substrate, to different color tones depending on the thickness of the printed ink layer. Multitone inks typically comprise one, two or a plurality of pigment(s) having a poor covering power, i.e. a high transparency. Multitone inks are advantageously used in intaglio printing due to the broad range of printed thickness achievable with this printing technique.

However the ability of an intaglio ink to produce a multitone intaglio feature is typically rather difficult to predict and/or to control: according to the printed ink thickness some ink compositions give only a slight variation of the lightness of the printed layer, while other ink compositions give truly different color shades.

Therefore, there remains a need for a method to provide multi-characteristic intaglio elements in an improved, predictable and controlled manner.

It is also highly desirable to develop a method to provide intaglio elements with multi-characteristic pattern, i.e. intaglio elements having various physical properties, such as machine readable properties, within areas comprising two or more adjacent zones per area of 1cm$^2$ or a mosaic of three or more adjacent zones per area of 1cm$^2$ with a highly sophisticated pattern and a precise register.

## SUMMARY

Accordingly, it is an object of the present invention to overcome the deficiencies of the prior art discussed above. This is achieved by the provision of an intaglio ink composition comprising a first component A) selected from the group consisting of one or more dyes and/or small particles and a second component B) selected from the group of larger particles than the particles of the first component, in particular for use in combination with an intaglio engraved printing plate comprising at least a first set of engraved furrow elements and at least a second set of engraved furrow elements, wherein said engraved furrow elements of the first set and of the second set have different depth.

The present invention is thus related to an intaglio ink composition comprising a first component A) and a second component B), wherein the first component A) is selected from the group consisting of

i) about 0.1% to about 40 % by weight of a plurality of first particles having a modal particle diameter between about 1 nm and about 3 $\mu$m, said plurality of first particles may be a material having machine readable properties, preferably selected from the group consisting of magnetic properties, UV- or IR-absorbing properties, optically variable properties, light polarization properties, electro-conductive properties, luminescent properties and combinations thereof, ii) about 1% to about 20 % by weight of one or more dyes, said one or more dyes may be a material having machine readable properties preferably selected from the group consisting of IR-absorbing properties, luminescent properties and combinations thereof, and iii) combinations thereof,

and the second component B) is about 0.1 to about 40 % by weight of a plurality of second particles having a modal particle diameter between about 6 $\mu$m and about 25 $\mu$m, said plurality of second particles may be a material having machine readable properties preferably selected from the group consisting of magnetic properties, UV- or IR-absorbing properties, optically variable properties, light polarization properties, electro-conductive properties and luminescent properties and combinations thereof, wherein the first component A) and the second component B) exhibit at least one different characteristic, said characteristic being selected from the group consisting of the CIE (1976) color index parameters, machine readable properties, and a combination thereof, the % by weight being based on the total weight of the intaglio ink composition.

The present invention is furthermore related to a process for printing a security feature or pattern on at least one side of a substrate with the intaglio ink composition described herein, said process comprising the steps of:

i) inking an intaglio engraved printing plate with said intaglio ink composition, said intaglio engraved printing plate comprising at least a first set of engraved furrow elements and at least a second set of engraved furrow elements, said engraved furrow elements of the first set and said engraved furrow elements of the second set having a different depth,

ii) wiping any excess of the intaglio ink composition from the intaglio engraved printing plate,

iii) printing the security feature or pattern with the intaglio engraved printing plate by applying the intaglio ink composition onto the substrate, and

iv) curing the intaglio ink composition by oxidative curing and/or by UV-Vis-radiation .

The present invention is furthermore related to a security feature or pattern printed according to the process described above, in particular intaglio security feature or pattern comprising a mosaic of three or more adjacent, preferably intertwined or alternating, zones per area of 1cm$^2$, said three or more zones having different CIE (1976) color index parameters characterized by their total color difference $\Delta E^*_{(Z)}$ and/or differing by at least one parameter selected from the group consisting of magnetic properties, UV- or IR-absorbing properties, optically variable properties, light polarization properties, electro-conductive properties, luminescent properties and combinations thereof.

The present invention is furthermore related to a security document comprising the intaglio security feature or pattern described above.

The present invention is furthermore related to the use of the intaglio ink composition described above for the intaglio printing of a multi-characteristic intaglio security feature or pattern, preferably according to the process described above, so as to protect a security document preferably selected from the group consisting of banknotes, identity documents, checks, vouchers, transaction cards, stamps and tax labels against counterfeiting or fraud.

The present invention is furthermore related to the use of the security feature or pattern described above for the protection of a security document preferably selected from the group consisting of banknotes, identity documents, checks, vouchers, transaction cards, stamps and tax labels against counterfeiting or fraud.

A particularly advantageous property of the intaglio ink composition and of the process given by the present invention resides in the ability to provide an easily tunable and predictable way of printing multi-characteristic intaglio security features or patterns with a single intaglio ink composition in a single printing step thus reducing the number of required intaglio printing units and of chablons.

## BRIEF DESCRIPTION OF THE FIGURES

| | |
|---|---|
| **Figure 1:** | schematically represents the principle of the present invention. |
| **Figure 2a-e:** | schematically represent the cross-section of furrow elements engraved in an intaglio plate having different shapes and depths. |
| **Figure 3:** | represents a picture taken with a conventional camera of a comparative example of a multitone intaglio feature. |
| **Figure 4:** | represents a picture taken with an IR camera of the comparative example of a multitone intaglio feature of Figure 3. |
| **Figure 5:** | represents a picture taken with a conventional camera of an example of a multi-characteristic intaglio security feature according to the present invention. |
| **Figure 6:** | represents a picture taken with an IR camera of the example of the multi-characteristic intaglio security feature of Figure 5. |
| **Figure 7:** | represents a picture taken with a conventional camera of an example of another multi-characteristic intaglio security feature according to the present invention. |
| **Figure 8:** | represents a picture taken with an IR camera of the example of the multi-characteristic intaglio security feature of Figure 7. |
| **Figure 9:** | represents a picture taken with a conventional camera of an example of another multi-characteristic intaglio security feature according to the present invention. |
| **Figure 10:** | represents a picture taken with an IR camera of the example of the multi-characteristic intaglio security feature of Figure 9. |

## DETAILED DESCRIPTION

The following definitions are to be used to interpret the meaning of the terms discussed in the description and recited in the claims.

As used herein, the article "a" indicates one as well as more than one and does not necessarily limit its referent noun to the singular.

As used herein, the terms "about" mean that the amount or value in question may be the value designated or some other value about the same. The phrase is intended to convey that similar values within a range of ±5% of the indicated value promote equivalent results or effects according to the invention.

As used herein, the term "and/or" or "or/and" means that either all or only one of the elements of said group may be present. For example, "A and/or B" shall mean "only A, or only B, or both A and B".

As used herein, the term "at least" is meant to define one or more than one, for example one or two or three.

As used herein, the term "comprise" or variations such as "comprises" or "comprising" will be understood to imply the inclusion of a stated feature, integer, step or component or group of features, integers, steps or components but does not preclude the presence or addition of one or more others features, integers, steps or components.

As used herein, the term "composition" refers to any composition which is capable of forming a coating on a solid substrate and which can be applied preferentially but not exclusively by a printing method.

As used herein, the term "intaglio security feature or pattern" refers to any indicia or design consisting of at least one layer printed with an intaglio ink composition used as a security element for the protection and the authentication of security documents.

As used herein, the term "multi-characteristic intaglio security feature or pattern" refers to any intaglio security feature or pattern comprising two or more adjacent printed zones per area of $1cm^2$ exhibiting different physical characteristics, said different physical characteristics being selected from the group consisting of i) different CIE (1976) color index parameters, ii) different machine readable properties such as magnetic properties, UV- or IR-absorbing properties, optically variable properties, light polarization properties, electro-conductive properties, luminescent properties and combinations thereof and iii) a combination of different CIE (1976) color index parameters and different machine readable properties. By "adjacent", it is meant that the printed zones may be spaced apart by a distance less than or equal to about 5 mm, preferably by a distance between about 50 $\mu$m and about 5 mm. A particular embodiment of a "multi-characteristic intaglio security feature or pattern" is an intaglio security feature or pattern comprising a mosaic of three or more adjacent, preferably intertwined or alternating, zones per area of $1cm^2$, said three or more zones differing by at least one parameter or property selected from the group consisting of different CIE (1976) color index parameters, or different machine readable properties such as magnetic properties, UV- or IR-absorbing properties, optically variable properties, light polarization properties, electro-conductive properties, luminescent properties, and combinations thereof. According to the present invention, a "mosaic of three or more adjacent zones per area of $1cm^2$" is an arrangement of three or more adjacent zones of similar or different shape in a specific manner so as to provide a desired pattern. The multi-characteristic intaglio security features or patterns described herein comprising zones of different physical characteristics cannot be easily produced with conventional intaglio printing device due to issues of inks contamination between inks having different physical characteristics or due to register issues.

As used herein, the term "machine readable material" refers to a material which exhibits at least one distinctive property which is detectable by a device or machine, such as for example a magnetic detector (when the machine readable security material is a material having magnetic properties) an IR-camera (when the machine readable security material is a material having IR-absorbing properties), or a circularly polarizing filter (when the machine readable security material is a material having light polarization properties), and which can be comprised in a layer so as to confer a way to authenticate said layer or article comprising said layer by the use of a particular equipment for its authentication.

As used herein the term "intertwined or alternating zones" refers to zones which are arranged adjacent to each other so that the different zones occur by turns (alternating zones, e.g. a first zone A is followed by a second zone B, which again is followed by the first zone A), and/or that the different zones are joined in such a manner that a pattern is formed which provides an appearance as if the zones were twined with each other (intertwined zones). In particular, the intertwined or alternating zones display at least one different physical characteristic, the physical characteristic being the total color difference $\Delta E^*_{(Z)}$ according to the CIE (1976) color index parameters (as discussed below in more detail), the machine readable properties, and/or combinations of the $\Delta E^*_{(Z)}$ according to the CIE (1976) color index parameters and machine readable properties.

The present invention provides a method to obtain an improved and predictable control of the multi-characteristic properties of an intaglio security feature or pattern. The method described herein makes use of an intaglio ink composition comprising:

a first component A) and a second component B), wherein

A) is selected from the group consisting of about 0.1% to about 40% by weight of a plurality of first particles having a modal particle diameter between about 1 nm and about 3 $\mu$m, said plurality of first particles may be a material having machine readable properties preferably selected from the group consisting of magnetic properties, UV- or IR-absorbing properties, optically variable properties, light polarization properties, electro-conductive properties, luminescent properties and combinations thereof,

B) is a plurality of second particles consisting of particles having a modal particle diameter between about 6 $\mu$m and about 25 $\mu$m, and wherein said plurality of second particles may be a material having machine readable properties, preferably selected from the group consisting of magnetic properties, UV- or IR-absorbing properties, optically variable properties, light polarization properties, electro-conductive properties, luminescent properties and combinations thereof.

According to another embodiment, the method described herein makes use of an intaglio ink composition comprising a first component A) and the above described second component B), wherein A is selected from the group consisting of about 1% to about 20% by weight of one or more dyes, said one or more dyes may be a material having machine readable properties preferably selected from the group consisting of IR-absorbing properties, luminescent properties and combinations thereof.

According to another embodiment, the method described herein makes use of an intaglio ink composition comprising a first component A) being a mixture of the above described plurality of first particles and the above described one or more dyes, and the above described second component B).

According to the present invention, the first component A) and the second component B) exhibit at least one different characteristic, said characteristic being selected from the group consisting of the CIE (1976) color index parameters, machine readable properties, and a combination thereof.

According to the present invention, various combinations of the properties of component A) and component B) are possible:

The first component A) and the second component B) may have different CIE (1976) color parameters, i.e. their total color difference $\Delta E^*_{A)-B)}$ between the component B) and the component A) is at least 2, preferably at least 4, more preferably at least 6, and still more preferably 10.

Alternatively, the first component A) and the second component B) may have different machine-readable properties. In said embodiment, the first component A) and the second component B) may have different or the same CIE (1976) color parameters. Same CIE (1976) color parameters means that the total color difference $\Delta E^*_{A)-B)}$ between the component B) and the component A) is less than 2.

Alternatively, the first component A) and the second component B) may have the same or different machine-readable properties. When the component A) and the component B) are materials having the same machine readable properties, they are selected such as to provide distinguishable values of the machine readable properties when detected with a corresponding detector. In said embodiment, the first component A) and the second component B) may have different or the same CIE (1976) color parameters.

The particles of the first component A) have a modal particle diameter between about 1 nm and about 3 $\mu$m, preferably between about 0.1 $\mu$m and about 3 $\mu$m. The particles of the second component B) have a modal particle diameter between about 6 $\mu$m and about 25 $\mu$m.

Particle size controls a number of properties important to the ink chemist such as e.g. optical properties, including opacity, tinting strength, color hue, gloss, viscosity and sedimentation of slurries comprising the particles. References and examples of some particle parameters and the related particles properties may be found e.g. in Advances in Color Science and Technology, (2002), Vol 5 (1), pages 1-12, or on the web site of equipment manufactures, e.g. A Basic Guide to Particle Characterization, ed Malvern, Malvern Instruments Worldwide, or in Particles Size Measurement by T. Allen, Vol1, 5th ed, Chapman & Hall, London, 1997. A variety of different methods for the descriptive and quantitative representation of particle shape and morphology are known. Particles characterization and particles size measurement may be done using various technologies that deliver various parameters and information. The appropriate characterization technique is selected according to the intended application and to the required information. Various particle size characterization techniques include for instance dynamic light scattering (determination of distribution of the diffusion coefficients of the particles), static light scattering (determination of absolute molecular weight of the particles), laser diffraction (determination of particles size distribution), automated vision systems (simultaneous determination of the particle size and shape). Further useful techniques include the zeta potential measurement (determination of electrostatic colloidal dispersion stability), rotational viscometry and rheology (determination of flow properties, viscoelastic and normal stresses) and capillary rheology allow to measure further parameters related to the size and shape of particles.

The term "modal particle diameter" refers to the particle diameter value at the highest point of the frequency curve (particle size distribution curve) of the particles diameter. According to the present invention, Modal particle diameter measurements are performed by laser diffraction with a Malvern Mastersizer Micro-P.

As known in the art, dyes and pigments may be characterized by their CIE (1976) color index parameters a*, b* and L*. The CIE (1976) color index parameters a*, b* and L* may also be useful to characterize a printed ink composition. The term "CIE (1976) parameters" is to be understood according to ISO 11664-4:2008. Some examples may be found in standard textbooks e.g "Coloristik fur Lackanwendungen", Tasso Bäurle et al., Farbe und Lack Edition, 2012, ISBN 978-3-86630-869-5.

According to a preferred embodiment, the intaglio ink composition disclosed herein comprises a component A) and a component B) having different CIE (1976) color index parameters. The different CIE (1976) color index parameters of the component A) and the component B) are characterized by their total color difference $\Delta E^*_{A)-B)}$. The $\Delta E^*_{A)-B)}$ value is calculated according to the following equation:

$$\Delta E^*_{A)-B)} = ((L^*_{B)} - L^*_{A)})^2 + (a^*_{B)} - a^*_{A)})^2 + (b^*_{B)} - b^*_{A)})^2)^{1/2}$$

with the parameters

$L^*_{A)}$ representing the CIE (1976) L* value of the component A)
$L^*_{B)}$ representing the CIE (1976) L* value of the component B)
$a^*_{A)}$ representing the CIE (1976) a* value of the component A)
$a^*_{B)}$ representing the CIE (1976) a* value of the component B)
$b^*_{A)}$ representing the CIE (1976) b* value of the component A)
$b^*_{B)}$ representing the CIE (1976) b* value of the component B)

The $\Delta E^*_{A)-B)}$ values are measured with a spectrophotometer SF 300 from Datacolor. Measurements are performed with a dual-beam spectrophotometer with geometry diffuse illuminator / detection at 8° (sphere diameter: 66 mm; $BaSO_4$ coated, light source: pulsed Xenon, filtered to approximate D65 (standard Observer 10°))

According to one aspect of the present invention, the intaglio ink composition described herein is particularly useful to produce in a controlled and predictable way intaglio security features or patterns exhibiting different CIE (1976) color index parameters; also referred in the art as multitone intaglio features or patterns.

An ink composition is said to convey a multitone effect when different zones of a feature or pattern printed with said ink composition convey different colors, depending on the printed ink thickness of the different zones.

In one embodiment, the first component A) is selected from the group consisting of one or more dyes.

Dyes are -contrary to pigment- soluble in the surrounding medium such as for example an ink composition or coating composition that they color; no discrete particles are present and no scattering occurs.

Dyes suitable for printing inks of the present invention are known in the art. Dyes comprised in the intaglio ink composition described herein are selected from the group consisting of reactive dyes, direct dyes, anionic dyes, cationic dyes, acid dyes, basic dyes, food dyes, metal-complex dyes, solvent dyes and mixtures thereof. Typical examples of dyes suitable for the present invention are selected from the group consisting of coumarines, cyanines, oxazines, uranines, phtalocyanines, indolinocyanines, triphenylmethanes, naphtalocyanines, indonanaphtalo-metal dyes, anthraquinones, anthrapyridones, azo dyes, rhodamines, squarilium dyes, croconium dyes and mixtures thereof. Typical examples of dyes suitable for the present invention are selected from the group consisting of C.I. Acid Yellow 1, 3, 5, 7, 11, 17, 19, 23, 25, 29, 36, 38, 40, 42, 44, 49, 54, 59, 61, 70, 72, 73, 75, 76, 78, 79, 98, 99, 110, 111, 121, 127, 131, 135, 142, 157, 162, 164, 165, 194, 204, 236, 245; C.I. Direct Yellow 1, 8, 11, 12, 24, 26, 27, 33, 39, 44, 50, 58, 85, 86, 87, 88, 89, 98, 106, 107, 110, 132, 142, 144; C.I. Basic Yellow 13, 28, 65; C.I. Reactive Yellow 1, 2, 3, 4, 6, 7, 11, 12, 13, 14, 15, 16, 17, 18, 22, 23, 24, 25, 26, 27, 37, 42; C.I. Food Yellow 3, 4; C.I. Acid Orange 1, 3, 7, 10, 20, 76, 142, 144; C.I. Basic Orange 1, 2, 59; C.I. Food Orange 2; C.I. Orange B; C.I. Acid Red 1, 4, 6, 8, 9, 13, 14, 18, 26, 27, 32, 35, 37, 42, 51, 52, 57, 73, 75, 77, 80, 82, 85, 87, 88, 89, 92, 94, 97, 106, 111, 114, 115, 117, 118, 119, 129, 130, 131, 133, 134, 138, 143, 145, 154, 155, 158, 168, 180, 183, 184, 186, 194, 198, 209, 211, 215, 219, 221, 249, 252, 254, 262, 265, 274, 282, 289, 303, 317, 320, 321, 322, 357, 359; C.I. Basic Red 1, 2, 14, 28; C.I. Direct Red 1, 2, 4, 9, 11, 13, 17, 20, 23, 24, 28, 31, 33, 37, 39, 44, 46, 62, 63, 75, 79, 80, 81, 83, 84, 89, 95, 99, 113, 197, 201, 218, 220, 224, 225, 226, 227, 228, 229, 230, 231, 253; C.I. Reactive Red 1, 2, 3, 4, 5, 6, 7, 8, 11, 12, 13, 15, 16, 17, 19, 20, 21, 22, 23, 24, 28, 29, 31, 32, 33, 34, 35, 36, 37, 38, 39, 40, 41, 42, 43, 45, 46, 49, 50, 58, 59, 63, 64, 108, 180; C.I. Food Red 1, 7, 9, 14; C.I. Acid Blue 1, 7, 9, 15, 20, 22, 23, 25, 27, 29, 40, 41, 43, 45, 54, 59, 60, 62, 72, 74, 78, 80, 82, 83, 90, 92, 93, 100, 102, 103, 104, 112, 113, 117, 120, 126, 127, 129, 130, 131, 138, 140, 142, 143, 151, 154, 158, 161, 166, 167, 168, 170, 171, 182, 183, 184, 187, 192, 193, 199, 203, 204, 205, 229, 234, 236, 249, 254, 285; C.I. Basic Blue 1, 3, 5, 7, 8, 9, 11, 55, 81; C.I. Direct Blue 1, 2, 6, 15, 22, 25, 41, 71, 76, 77, 78, 80, 86, 87, 90, 98, 106, 108, 120, 123, 158, 160, 163, 165, 168, 192, 193, 194, 195, 196, 199, 200, 201, 202, 203, 207, 225, 226, 236, 237, 246, 248, 249; C.I. Reactive Blue 1, 2, 3, 4, 5, 7, 8, 9, 13, 14, 15, 17, 18, 19, 20, 21, 25, 26, 27, 28, 29, 31, 32, 33, 34, 37, 38, 39, 40, 41, 43, 44, 46, 77; C.I. Food Blue 1, 2; C.I. Acid Green 1, 3, 5, 16, 26, 104; C.I. Basic Green 1, 4; C.I: Food Green 3; C.I. Acid Violet 9, 17, 90, 102, 121; C.I. Basic Violet 2, 3, 10, 11, 21; C.I. Acid Brown 101, 103, 165, 266, 268, 355, 357, 365, 384; C.I. Basic Brown 1; C.I. Acid Black 1, 2, 7, 24, 26, 29, 31, 48, 50, 51, 52, 58, 60, 62, 63, 64, 67, 72, 76, 77, 94, 107, 108, 109, 110, 112, 115, 118, 119, 121, 122, 131, 132, 139, 140, 155, 156, 157, 158, 159, 191, 194; C.I. Direct Black 17, 19, 22, 32, 39, 51, 56, 62, 71, 74, 77, 94, 105, 106, 107, 108, 112, 113, 117, 118, 132, 133, 146, 154, 168; C.I. Reactive Black 1, 3, 4, 5, 6, 8, 9, 10, 12, 13, 14, 18, 31; C.I. Food Black 2; C.I. Solvent Yellow 19, C.I. Solvent Orange 45, C.I. Solvent Red 8, C.I. Solvent Green 7, C.I. Solvent Blue 7, C.I. Solvent Black 7; C.I. Disperse Yellow 3, C.I. and mixtures thereof. Disperse Red 4, 60, C.I. Disperse Blue 3, metal azo dyes disclosed in US 5,074,914, US 5,997,622, US 6,001,161, JP 02-080470, JP 62-190272, JP 63-218766.

When the first component A) is selected from the group consisting of one or more dyes having machine readable properties, the machine readable properties are preferably selected from the group consisting of IR-absorbing properties, luminescent properties and combinations thereof.

IR-absorbing dyes suitable for printing inks of the present invention are known in the art. IR-absorbing dyes comprised in the intaglio ink composition described herein are selected from the group consisting of cyanines, squaraines, croconaines, phthalocyanines, naphthalocyanines, quinones, anthraquinones, polymethines, diphenylmethanes, triphenylmethanes, nickel dithiol complexes, pyrilium, thiapyrilium, triarylammonium and mixtures thereof.

Luminescent dyes suitable for printing inks of the present invention are known in the art. Luminescent dyes comprised in the intaglio ink composition described herein are selected from the group consisting of naphthalmides, coumarins, rhodamines, fluoresceins, distyryl biphenyls, stilbenes, cyanines, phthalocyanines, xanthenes, thioxanthenes, naphtholactames, azlactones, methanes, oxazines, pyrazolines, polypyridyl-ruthenium complexes, polypyridyl-phenazine-ruthenium complexes, platinum-porphyrin complexes, long-life europium and terbium complexes and mixtures thereof. Typical examples of dyes suitable for the present invention are e.g. Solvent Yellow 44, Solvent Yellow 94, Solvent Yellow 160, Basic Yellow 40, Basic Red 1, Basic Violet 10, Acid Red 52, Yellow s790, fluorescein isothiocyanate, tris(2,2'-bipyridyl)-ruthenium chloride, tris(1,10-phenanthroline)-ruthenium chloride, octaethyl-platinum-porphyrin.

When the first component A) is selected from the group consisting of one or more dyes, the one or more dyes used in the ink composition described herein are preferably present in an amount from about 1% to about 20% by weight, more preferably from about 2% to about 10% by weight, the weight % being based on the total weight of the intaglio ink composition.

In another embodiment, the first component A) is selected from the group consisting of a plurality of first particles. In addition, the second component B) is selected from the group consisting of a plurality of second particles. The first and second particles differ in their modal particle diameter, as described above.

Preferably, the first component A) and the second component B) comprised in the intaglio ink composition described herein are pigment particles. As used herein, the term "pigment particle" or "pigment" is to be understood according to the definition given in DIN 55943: 1993-11 and DIN EN 971-1: 1996-09. Pigments are materials in powder or flake form which are -contrary to dyes- not soluble in the intaglio ink composition.

Preferably, suitable pigment particles comprised in the intaglio ink composition described herein may be organic or inorganic pigment particles. Suitable pigment particles comprised in the intaglio ink composition described herein may be color constant pigments. Typical examples of color constant organic and inorganic pigments include without limitation C.I. Pigment Yellow 12, C.I. Pigment Yellow 42, C.I. Pigment Yellow 93, 109, C.I. Pigment Yellow 110, C.I. Pigment Yellow 147, C.I. Pigment Yellow 173, C.I. Pigment Orange 34, C.I. Pigment Orange 48 , C.I. Pigment Orange 49 , C.I. Pigment Orange 61, C.I. Pigment Orange 71 C.I. Pigment Orange 73, C.I. Pigment Red 9, C.I. Pigment Red 22, C.I. Pigment Red 23, C.I. Pigment Red 67, C.I. Pigment Red 122, C.I. Pigment Red 144, C.I. Pigment Red 146, C.I. Pigment Red 170, C.I. Pigment Red 177, C.I. Pigment Red 179, C.I. Pigment Red 185, C.I. Pigment Red 202, C.I. Pigment Red 224, C.I. Pigment Red 242, C.I. Pigment Red 254, C.I. Pigment Red 264, C.I. Pigment Brown 23, C.I. Pigment Blue 15, C.I. Pigment Blue 15:3, C.I. Pigment Blue 60, C.I. Pigment Violet 19, C.I. Pigment Violet 23, C.I. Pigment Violet 32, C.I. Pigment Violet 37, C.I. Pigment Green 7, C.I. Pigment Green 36, C.I. Pigment Black 7, C.I. Pigment Black 11, metal oxides, antimony yellow, lead chromate, lead chromate sulfate, lead molybdate, ultramarine blue, cobalt blue, manganese blue, chrome oxide green, hydrated chrome oxide green, cobalt green and metal sulfides, such as cerium or cadmium sulfide, cadmium sulfoselenides, zinc ferrite, bismuth vanadate, Prussian blue, $Fe_3O_4$, carbon black, azo, azomethine, methine, anthraquinone, phthalocyanine, perinone, perylene, diketopyrrolopyrrole, thioindigo, thiazinindigo, dioxazine, iminoisoindoline, iminoisoindolinone, quinacridone, flavanthrone, indanthrone, anthrapyrimidine and quinophthalone pigments.

In a further embodiment, suitable pigment particles comprised in the intaglio ink composition described herein may be optically variable pigments. Optically variable pigments are known in the field of security printing. Optically variable pigments are used to print optically variable elements (also referred in the art as goniochromatic elements), i.e. elements which exhibit a viewing-angle or incidence-angle dependent color. Optically variable elements are used for instance to protect banknotes and other security documents against counterfeiting and/or illegal reproduction by commonly available color scanning, printing and copying office equipment.

Typically, optically variable pigments may be selected from the group consisting of thin film interference pigments, magnetic thin film interference pigments, interference coated pigments cholesteric liquid crystal pigments and mixtures thereof. Suitable thin film interference pigments exhibiting optically variable characteristics are known to those skilled in the art and disclosed in US 4,705,300; US 4,705,356; US 4,721,217; US 5,084,351; US 5,214,530; US 5,281,480; US 5,383,995; US 5,569,535, US 5,571,624 and in the thereto related documents. Suitable magnetic thin film interference pigments exhibiting optically variable characteristics are known to those skilled in the art and disclosed in US 4,838,648; WO 02/073250 A2; EP 0 686 675 A1; WO 03/00801 A2; US 6,838,166; WO 2007/131833 A2 and in the thereto related documents. Examples of films and pigments made from cholesteric liquid crystal materials and their preparation are disclosed in US 5,211,877; US 5,362,315 and US 6,423,246 and in EP 1 213 338 A1; EP 1 046 692 A1 and EP 0 601 483 A1, the respective disclosure of which is incorporated by reference herein.

The machine readable properties described herein are embodied by machine readable materials as component A) and/or B). Suitable materials that confer machine readable properties to the intaglio ink composition described herein are selected from the group consisting of material having magnetic properties, UV- or IR-absorbing properties, optically variable properties, light polarizing properties, luminescence properties, electro-conductive properties and combinations

8

thereof.

Luminescent materials are widely used as marking and machine readable materials in security applications. Luminescent materials may be inorganic (inorganic host crystals or glasses doped with luminescent ions), organic or organometallic (complexes of luminescent ion(s) with organic ligand(s)) substances). Luminescent materials in pigment form have been widely used in inks (see US 6 565 770, WO 2008/033059 A2 and WO 2008/092522 A1). Examples of luminescent materials include among others sulfides, oxysulfides, phosphates, vanadates, *etc.* of non-luminescent cations, doped with at least one luminescent cation chosen from the group consisting of transition-metal and the rare-earth ions; rare earth oxysulfides and rare-earth metal complexes such as those described in WO 2009/005733 A2 or in US 7 108 742. Examples of inorganic materials include without limitation $La_2O_2S:Eu$, $ZnSiO_4:Mn$, and $YVO_4:Nd$.

Magnetic materials are widely used as marking materials in security applications and have been used since long in the field of banknote printing, to confer to the printed currency an additional, covert, security element which can be easily sensed by electronic means. Magnetic materials exhibit particular, detectable magnetic properties of the ferromagnetic or ferrimagnetic type and include permanent magnetic materials (hard-magnetic materials with coercivity $Hc > 1000$ A/m) and magnetizable materials (soft-magnetic materials with coercivity $Hc <= 1000$ A/m according to IEC60404-1 (2000)). Typical examples of magnetic materials include iron, nickel, cobalt, manganese and their magnetic alloys, carbonyl iron, chromium dioxide $CrO_2$, magnetic iron oxides (e.g. $Fe_2O_3$; $Fe_3O_4$), magnetic ferrites $M(II)Fe(III)_2O_4$ and hexaferrites $M(II)Fe(III)_{12}O_{19}$, the magnetic garnets $M(III)_3Fe(III)_5O_{12}$ (such as Yttrium iron garnet $Y_3Fe_5O_{12}$) and their magnetic isostructural substitution products and particles with permanent magnetization (e.g. $CoFe_2O_4$). Magnetic pigments particles comprising a magnetic core material which is surrounded (coated) by at least one layer of another material such as those described in WO 2010/115986 A2 may also be used for the present invention.

Infrared (IR) absorbing materials, i.e. materials absorbing in the near-infrared (NIR) range of the electromagnetic spectrum, most generally in the 700 nm to 2500 nm wavelength range, are widely known and used as marking materials in security applications to confer to the printed documents an additional, covert, security element which help their authentication. For example, security features having IR-absorbing properties have been implemented in banknotes for use by automatic currency processing equipment, in banking and vending applications (automatic teller machines, automatic vending machines, etc.), in order to recognize a determined currency bill and to verify its authenticity, in particular to discriminate it from replicas made by color copiers. IR absorbing materials include IR absorbing inorganic materials, glasses comprising substantial amounts of IR-absorbing atoms or ions or entities which display IR-absorption as a cooperative effect, IR absorbing organic materials and IR absorbing organometallic materials (complexes of cation(s) with organic ligand(s), wherein either the separate cation and/or the separate ligand, or both in conjunction, have IR-absorbing properties). Typical examples of IR absorbing materials include among others carbon black, quinone-diimmonium or aminium salts, polymethines (e.g. cyanines, squaraines, croconaines), phthalocyanine or naphthalocyanine type (IR-absorbing pi-system), dithiolenes, quaterrylene diimides, metal (e.g. transition metals or lanthanides) phosphates, lanthanum hexaboride, indium tin oxide, antimony tin oxide in nano-particulate form and doped tin(IV) oxide (cooperative property of the $SnO_4$ crystal). IR absorbing materials comprising a transition element compound and whose infrared absorption is a consequence of electronic transitions within the d-shell of transition element atoms or ions such as those described in WO 2007/060133 A2 may also be used for the present invention.

Ultraviolet (UV) absorbing materials, i.e. materials absorbing in the UV-range of the electromagnetic spectrum, most generally in the 200 nm to 400 nm wavelength range, are widely known and used as light stability additives in the field of printing inks. Ultraviolet (UV) absorbing materials are also used as marking materials in security applications to confer to the printed documents an additional, covert, security element which help their authentication. UV-absorbing materials useful as stability additives include 2-hydroxybenzophenones, 2-(2'-hydroxyphenyl)-benzotriazoles, benzylidene maloneates, salicylates, monobenzoates, oxamides, oxalic acid diamides, 2-(2'-hydroxyphenyl)-1,3,5-triazines and derivatives thereof. Typical examples of UV-absorbers useful for printing ink application are given in EP 1836002 B1, EP 1021421 B1 or EP 1242391 B1. For security applications, UV-absorbing materials which at least partially re-emit the absorbed energy in the form of luminescence are particularly useful.

Optically variable materials (also referred in the art as goniochromatic elements) exhibit a viewing-angle or incidence-angle dependent color. Optically variable materials are widely used as marking materials in security applications and have been used since long in the field of banknote printing, to confer to the printed currency an additional overt, security element which can be easily sensed by electronic means. The optically variable materials described herein comprise a plurality of optically variable pigments. Preferably, at least a part of the plurality of optically variable pigments consists of thin film interference pigments, interference coated pigments, cholesteric liquid crystal pigments and mixtures thereof. Preferably optically variable materials described herein comprise thin film interference pigments. Suitable thin film interference pigments exhibiting optically variable characteristics are known to those skilled in the art and disclosed in US 4,705,300; US 4,705,356; US 4,721,217; US 5,084,351; US 5,214,530; US 5,281,480; US 5,383,995; US 5,569,535, US 5,571624 and in the thereto related documents. Preferably the thin film interference pigments comprise a Fabry-Perot reflector/dielectric/absorber multilayer structure and more preferably a Fabry-Perot absorber/dielectric/reflector/dielectric/absorber multilayer structure, wherein the absorber layers are partially transmitting and partially reflecting, the dielectric layers are transmitting and the reflective layer is reflecting the incoming light. Preferably, the reflector layer is selected from the group consisting of metals, metal alloys and combinations thereof, preferably selected from the group consisting of reflective metals, reflective metal alloys and combinations thereof and more preferably selected from the group consisting of aluminum (Al), chromium (Cr), nickel (Ni), and mixtures thereof and still more preferably aluminum (Al). Preferably, the dielectric layers are independently selected from the group consisting of magnesium fluoride ($MgF_2$), silicium dioxide ($SiO_2$) and mixtures thereof and more preferably magnesium fluoride ($MgF_2$). Preferably, the absorber layers are independently selected from the group consisting of chromium (Cr), nickel (Ni), metallic alloys and mixtures thereof and more preferably chromium (Cr). When at least a part of the plurality of optically variable pigments consists of thin film interference pigments, it is particularly preferred that the thin film interference pigments comprise a Fabry-Perot absorber/dielectric/reflector/dielectric/absorber multilayer structure consisting of a $Cr/MgF_2/Al/MgF_2/Cr$ multilayer structure.

Light polarizing materials exhibit the property of dispersing unpolarized incident light into components with different polarization, i.e. the reflected light to be left-hand or right-hand circularly polarized depending on the sense of rotation of the helices. In particular, cholesteric liquid crystal materials are known in the art as light polarizing materials due to the particular situation of the helical molecular arrangement. Light polarizing materials are widely used as marking materials in security applications and have been used since long in the field of banknote printing, to confer to the printed currency an additional covert, security element which can be easily sensed using a polarizing filter and/or by electronic means. Examples of films and pigments made from cholesteric liquid crystal materials and their preparation are disclosed in US 5,211,877; US 5,362,315 and US 6,423,246 and in EP 1 213 338 A1; EP 1 046 692 A1 and EP 0 601 483 A1, the respective disclosure of which is incorporated by reference herein. Pigments made from multilayers of cholesteric liquid crystal polymers may also be suitable for the present invention, examples of such cholesteric liquid crystal pigments are disclosed in WO 2008/000755 A1, which is incorporated by reference. The light polarizing materials disclosed herein are preferably cholesteric liquid crystal materials, more preferably pigments made from multilayers of cholesteric liquid crystal polymers.

Electro-conductive materials comprised in electro-conductive inks are widely used in the field of security applications. After deposition, electro-conductive inks dry out while forming a continuous or a semi-continuous electrical conductor. The conductor allows the current to pass through, or serves as an interconnect contact base to be connected with another conductor path, or serves as shielding against radio frequency or electromagnetic field. Examples of electro-conductive materials include metals, metal oxides, metal alloys and carbon compounds. Typical examples of electro-conductive materials based on metals include among others gold, silver, platinum, palladium, rhodium, ruthenium, copper, nickel, aluminum, iron, indium, tin, indium-tin oxide, antimony-tin oxide, zinc, tantalum, tungsten, osmium, and mixtures, oxides or alloys thereof. Typical examples of electro-conductive materials based on carbon include fullerenes, graphenes and carbon nanotubes (CNT).

The intaglio ink composition of the present invention comprises the component A) selected from the group consisting of one or more dyes, if present, in an amount from about 1% to about 20% by weight, preferably from about 2% to about 10% by weight. The intaglio ink composition of the present invention comprises the component A) selected from the group consisting of a plurality of first particles, if present, in an amount from about 0.1% to about 40% by weight, preferably from about 0.5% to about 30% by weight, more preferably from about 1% to about 20% by weight. The intaglio ink composition of the present invention comprises the component B) in an amount from about 0.1% to about 40% by weight, preferably from about 0.5% to about 30% by weight, more preferably from about 1% to about 20% by weight. All weight % mentioned here are based on the total weight of the intaglio ink composition.

The intaglio ink composition described herein is preferably selected from the group consisting of oxidatively drying intaglio ink compositions, radiation ink intaglio compositions and combinations or mixtures thereof. Typical intaglio ink compositions have been disclosed e.g. in EP 1 790 701 B1, EP 2 014 729 A2 or WO 2009/156 400 A1 (oxidatively drying inks); and in EP 1 260 563 B1 or EP 1 751 240 B1 (UV-curable inks).

Typically, the intaglio ink composition described herein has a viscosity between about 3 Pa·s and about 80 Pa·s, preferably between about 3 Pa·s and about 60 Pa·s, and still more preferably between about 5 Pa·s and about 60 Pa·s, as measured on a Haake Roto-Visco RV1 at 40°C and at a shear rate of 1000 s$^{-1}$.

Intaglio ink compositions described herein may comprise, in addition to the component A) and the component B), typical intaglio ink components known in the art, in particular one or more binders or varnishes, one or more waxes, one or more drying or curing catalysts, optionally one or more fillers and/or extenders, optionally one or more further additives, optionally a liquid medium, and optionally further dyes and/or pigments. As known by the man skilled in the art, the term "varnish" is used as a synonym of the term "binder"

In one embodiment, the intaglio ink composition described herein is an oxidatively drying intaglio ink composition. When the intaglio ink composition described herein is an oxidatively drying intaglio ink composition, the one or more drying or curing catalysts described here above are oxidative drying catalysts. Thus, when the intaglio ink composition described herein is an oxidatively drying intaglio ink composition, it comprises one or more oxidative drying catalysts (also referred to as oxypolymerization catalysts, siccativating agents, siccatives and driers).

According to one embodiment, the one or more binders for the oxidatively drying intaglio ink compositions described herein are drying oils, i.e. binders that cure under the action of oxygen, for instance oxygen from the air ("air-drying"). Alternatively, in order to accelerate the drying process, the drying process may be performed under hot air, infrared or combination of hot air and infrared.

The one or more binders for the oxidatively drying intaglio ink compositions are typically polymers comprising unsaturated fatty acid residues, saturated fatty acids residues or mixtures thereof. Preferably the one or more binders suitable for the present invention comprise unsaturated fatty acid residues to ensure the air drying properties. Particularly preferred are resins comprising unsaturated acid groups, even more preferred are resins comprising unsaturated carboxylic acid groups. However the resins may also comprise saturated fatty acids residues. Preferably the one or more binders suitable for the present invention comprise acid groups, i.e. the one or more binders are selected among acid modified resins. The one or more binders suitable for the present invention may be selected from the group consisting of e.g. alkyd resins, vinyl polymers, polyurethane resins, hyperbranched resins, rosin-modified maleic resins, rosin-modified phenol resins, rosin esters, petroleum resin-modified rosin esters, petroleum resin-modified alkyd resins, alkyd resin-modified rosin/phenol resins, alkyd resin-modified rosin esters, acrylic-modified rosin/phenol resins, acrylic-modified rosin esters, urethane-modified rosin/phenol resins, urethane-modified rosin esters, urethane-modified alkyd resins, epoxy-modified rosin/phenol resins, epoxy-modified alkyd resins, terpene resins, nitrocellulose resins, polyolefins, polyamides, acrylic resins and combinations or mixtures thereof. Polymers and resins are herein interchangeably used.

Saturated and unsaturated fatty acid compounds may be obtained from natural and/or artificial sources. Natural sources include animal sources and/or plant sources. Animal sources may comprise animal fat, butter fat, fish oil, lard, liver fat, tuna fish oil, sperm whale oil and/or tallow oil and wax. Plant sources may comprise waxes and/or oils such as vegetable oils and/or non-vegetable oils. Examples of plant oils are: bitter gourd, borage, calendula, canola, castor, china wood, coconut, conifer seed, corn, cottonseed, dehydrated castor, flaxseed, grape seed, *Jacaranda mimosifolia* seed, linseed oil, palm, palm kernel, peanut, pomegranate seed, rapeseed, oïticica, safflower, snake gourd, soya (bean), sunflower, tall (also called liquid rosin), tung, and/or wheat germ. Artificial sources include synthetic waxes (such as micro crystalline and/or paraffin wax), distilling tail oil and/or chemical or biochemical synthesis methods. Suitable fatty acids also include (Z)-hexadan-9-enoic[palmitoleic]acid ($C_{16}H_{30}O_2$), (Z)-octadecan-9-enoic[oleic]acid ($C_{18}H_{34}O_2$), (9Z,11E,13E)-octadeca-9,11,13-trienoic[$\alpha$-eleostearic]acid ($C_{18}H_{30}O_2$), licanic acid, (9Z,12Z)-octadeca-9,12-dienoic[linoeic]acid ($C_{18}H_{32}O_2$), (5Z,8Z,11Z,14Z)-eicosa-5,8,11,14-tetraenoic[arachidonic]acid ($C_{20}H_{32}O_2$), 12-hydroxy-(9Z)-octadeca-9-enoic[ricinoleic]acid ($C_{18}H_{34}O_3$), (Z)-docosan-13-enoic[erucic]acid ($C_{22}H_{42}O_3$), (Z)-eicosan-9-enoic[gadoleic] acid ($C_{20}H_{38}O_2$), (7Z,10Z,13Z,16Z,19Z)-docosa-7,10,13,16,19-pentaenoic[clupanodonic] acid and mixtures thereof.

Suitable fatty acids useful herein are ethylenically unsaturated conjugated or nonconjugated C2-C24 carboxylic acids, such as myristoleic, palmitoleic, arachidonic, erucic, gadoleic, clupanadonic, oleic, ricinoleic, linoleic, linolenic, licanic, nisinic acid and eleostearic acids and mixtures thereof, typically used in the form of mixtures of fatty acids derived from natural or synthetic oils.

The one or more binders for the oxidatively drying intaglio ink compositions are preferably present in an amount from about 5% to about 95% by weight, more preferably from about 10 to about 80% by weight, and still more preferably from about 20 to about 60% by weight, the weight % being based on the total weight of the oxidatively drying intaglio ink composition.

Suitable oxidative drying catalysts or driers are known in the art. A drier is for example a metal salt which acts as a catalyst for the auto-oxidation reaction which is initiated on drying. Typical examples of oxidative drying catalysts or driers include without limitations polyvalent salts containing cobalt, calcium, copper, zinc, iron, zirconium, manganese, barium, zinc, strontium, lithium, vanadium and potassium as the cation; and halides, nitrates, sulphates, carboxylates like acetates, ethylhexanoates, octanoates and naphtenates or acetoacetonates as the anions. The oxidative drying catalysts are preferably present in the oxidatively drying intaglio ink composition in an amount from about 0.01% to about 7% by weight, more preferably from about 0.1% to about 5% by weight, and still more preferably from about 0.1% to about 4% by weight, the weight % being based on the total weight of the oxidatively drying intaglio ink composition. Examples of oxidative drying catalysts may be found e.g. in WO 2011/098583 A1 or in WO 2009/007988 A1 and the thereto related documents.

When the intaglio ink composition is an oxidatively drying intaglio ink composition, it may comprise an optional "liquid medium" selected from the group consisting of one or more organic solvents. Examples of such solvents include without limitation alcohols (such as for example methanol, ethanol, isopropanol, n-propanol, ethoxy propanol, n-butanol, sec-butanol, tert-butanol, iso-butanol, 2-ethylhexyl-alcohol and mixtures thereof); polyols (such as for example glycerol, 1,5-pentanediol, 1,2,6-hexanetriol and mixtures thereof); esters (such as for example ethyl acetate, n-propyl acetate, n-butyl acetate and mixtures thereof); carbonates (such as for example dimethyl carbonate, diethylcarbonate, di-n-butylcarbonate, 1,2-ethylencarbonate, 1,2-propylenecarbonate, 1,3-propylencarbonate and mixtures thereof); aromatic solvents (such as for example toluene, xylene and mixtures thereof); ketones and ketone alcohols (such as for example acetone, methyl ethyl ketone, methyl isobutyl ketone, cyclohexanone, diacetone alcohol and mixtures thereof); amides (such as for example dimethylformamide, dimethylacetamide and mixtures thereof); aliphatic or cycloaliphatic hydrocarbons; chlorinated hydrocarbons (such as for example dichloromethane); nitrogen-containing heterocyclic compound (such as for example N-methyl-2-pyrrolidone, 1,3-dimethyl-2-imidazolidone and mixtures thereof); ethers (such as for example diethyl ether, tetrahydrofuran, dioxane and mixtures thereof); alkyl ethers of a polyhydric alcohol (such as for example 2-methoxyethanol, 1-methoxypropan-2-ol and mixtures thereof); alkylene glycols, alkylene thioglycols, polyalkylene glycols or polyalkylene thioglycols (such for example ethylene glycol, polyethylene glycol (such as for example diethylene glycol, triethylene glycol, tetraethylene glycol), propylene glycol, polypropylene glycol (such as for example dipropylene glycol, tripropylene glycol), butylene glycol, thiodiglycol, hexylene glycol and mixtures thereof); nitriles (such as for example acetonitrile, propionitrile and mixtures thereof), and sulfur-containing compounds (such as for example dimethylsulfoxide, sulfolan and mixtures thereof). Preferably, the one or more organic solvents are selected from the group consisting of alcohols, esters and mixtures thereof.

According to another embodiment of the present invention, the intaglio ink compositions described herein are radiation curable intaglio ink compositions. Radiation curable compositions are compositions that may be cured by UV-visible light radiation (hereafter referred as UV-Vis-curable) or by Electron-beam radiation (hereafter referred as EB). Radiation curable compositions are known in the art and can be found in standard textbooks such as the series "Chemistry & Technology of UV & EB Formulation for Coatings, Inks & Paints", published in 7 volumes in 1997-1998 by John Wiley & Sons in association with SITA Technology Limited. Because UV-Vis curing advantageously leads to very fast curing processes and hence drastically decreases the drying time of the intaglio ink composition thus preventing set-off and blocking issues, the radiation curable intaglio ink compositions described herein are preferably UV-Vis-curable intaglio ink compositions.

UV-Vis curing advantageously leads to very fast curing processes and hence drastically decreases the drying time of the intaglio ink composition thus preventing set-off and blocking issues.

Preferably the one or more binders of the UV-Vis-curable intaglio ink compositions described herein are prepared from compounds selected from the group consisting of radically curable compounds, cationically curable compounds and mixtures thereof. Preferably the one or more binders of the UV-Vis-curable intaglio ink compositions described herein are prepared from radically curable compounds. Radically curable compounds are cured by free radical mechanisms consisting of the activation by energy of one or more photoinitiators which liberate free radicals which in turn initiate the polymerization so as to form the binder. Cationically curable compounds are cured by cationic mechanisms consisting of the activation by energy of one or more photoinitiators which liberate cationic species, such as acids, which in turn initiate the polymerization so as to form the binder. Preferably, the one or more binders of the UV-Vis-curable intaglio ink compositions described herein are prepared from compounds selected from the group consisting of (meth)acrylates, vinyl ethers, propenyl ethers, cyclic ethers such as epoxides, oxetanes, tetrahydrofuranes, lactones, cyclic thioethers, vinyl and propenyl thioethers, hydroxyl-containing compounds and mixtures thereof. More preferably, the one or more binders of the UV-Vis-curable intaglio ink compositions described herein are prepared from compounds selected from the group consisting of (meth)acrylates, vinyl ethers, propenyl ethers, cyclic ethers such as epoxides, oxetanes, tetrahydrofuranes, lactones and mixtures thereof.

According to one embodiment of the present invention, the one or more binders of the UV-Vis-curable intaglio ink compositions described herein are prepared from radically curable compounds selected from (meth)acrylates, preferably selected from the group consisting of epoxy (meth)acrylates, (meth)acrylated oils, polyester (meth)acrylates, aliphatic or aromatic urethane (meth)acrylates, silicone (meth)acrylates, amino (meth)acrylates, acrylic (meth)acrylates and mixtures thereof. The term "(meth)acrylate" in the context of the present invention refers to the acrylate as well as the corresponding methacrylate. The one or more binders of the UV-Vis-curable optically variable compositions described herein may be prepared with additional vinyl ethers and/or monomeric acrylates such as for example trimethylolpropane triacrylate (TMPTA), pentaerytritol triacrylate (PTA), tripropyleneglycoldiacrylate (TPGDA), dipropyleneglycoldiacrylate (DPGDA), hexanediol diacrylate (HDDA) and their polyethoxylated equivalents such as for example polyethoxylated trimethylolpropane triacrylate, polyethoxylated pentaerythritol triacrylate, polyethoxylated tripropyleneglycol diacrylate, polyethoxylated dipropyleneglycol diacrylate and polyethoxylated hexanediol diacrylate. The one or more binders are preferably present in an amount from about 5% to about 95% by weight, more preferably from about 10% to about 80% by weight, and still more preferably from about 20% to about 60% by weight, the weight % being based on the total weight of the UV-Vis-curable intaglio ink composition.

According to another embodiment of the present invention, the one or more binders of the UV-Vis-curable intaglio ink compositions described herein are prepared from cationically curable compounds selected from the group consisting of vinyl ethers, propenyl ethers, cyclic ethers such as epoxides, oxetanes, tetrahydrofuranes, lactones, cyclic thioethers, vinyl and propenyl thioethers, hydroxyl-containing compounds and mixtures thereof, preferably cationically curable compounds selected from the group consisting of vinyl ethers, propenyl ethers, cyclic ethers such as epoxides, oxetanes, tetrahydrofuranes, lactones and mixtures thereof. Typical examples of epoxides include without limitation glycidyl ethers, β-methyl glycidyl ethers of aliphatic or cycloaliphatic diols or polyols, glycidyl ethers of diphenols and polyphenols, glycidyl esters of polyhydric phenols, 1,4-butanediol diglycidyl ethers of phenolformalhedhyde novolak, resorcinol diglycidyl ethers, alkyl glycidyl ethers, glycidyl ethers comprising copolymers of acrylic esters (e.g. styrene-glycidyl methacrylate or methyl methacrylate-glycidyl acrylate), polyfunctional liquid and solid novolak glycidyl ethers resins, polyglycidyl ethers and poly(β-methylglycidyl) ethers, poly(N-glycidyl) compounds, poly(S-glycidyl) compounds, epoxy resins in which the glycidyl groups or β-methyl glycidyl groups are bonded to hetero atoms of different types, glycidyl esters of carboxylic acids and polycarboxylic acids, limonene monoxide, epoxidized soybean oil, bisphenol-A and bisphenol-F epoxy resins. Examples of suitable epoxides are disclosed in EP 2 125 713 B1. Suitable examples of aromatic, aliphatic or cycloaliphatic vinyl ethers include without limitation compounds having at least one, preferably at least two, vinyl ether groups in the molecule. Examples of vinyl ethers include without limitation triethylene glycol divinyl ether, 1,4-cyclohexanedimethanol divinyl ether, 4-hydroxybutyl vinyl ether, propenyl ether of propylene carbonate, dodecyl vinyl ether, tert-butyl vinyl ether, tert-amyl vinyl ether, cyclohexyl vinyl ether, 2-ethylhexyl vinyl ether, ethylene glycol monovinyl ether, butanediol monovinyl ether, hexanediol monovinyl ether, 1,4-cyclohexanedimethanol monovinyl ether, diethylene glycol monovinyl ether, ethylene glycol divinyl ether, ethylene glycol butylvinyl ether, butane-1,4-diol divinyl ether, hexanediol divinyl ether, diethylene glycol divinyl ether, triethylene glycol divinyl ether, triethylene glycol methylvinyl ether, tetraethylene glycol divinyl ether, pluriol-E-200 divinyl ether, polytetrahydrofuran divinyl ether-290, trimethylolpropane trivinyl ether, dipropylene glycol divinyl ether, octadecyl vinyl ether, (4-cyclohexyl-methyleneoxyethene)-glutaric acid methyl ester and (4-butoxyethene)-iso-phthalic acid ester. Examples of hydroxy-containing compounds include without limitation polyester polyols such as for example polycaprolactones or polyester adipate polyols, glycols and polyether polyols, castor oil, hydroxy-functional vinyl and acrylic resins, cellulose esters, such as cellulose acetate butyrate, and phenoxy resins. Further examples of suitable cationically curable compounds are disclosed in EP 2 125 713 B1 and EP 0 119 425 B1.

Alternatively, the one or more binders of the UV-Vis-curable intaglio ink compositions described herein are hybrid binders and may be prepared from a mixture of radically curable compounds and cationically curable compounds such as those described herein. When the one or more binders of the UV-Vis-curable intaglio ink compositions described herein are hybrid binders, the radically curable binder compounds may be present in an amount from about 1% to about 99% by weight and the cationically curable binder compounds may be present in an amount from about 1% to about 99% by weight, the weight % being based on the total weight of the binder of UV-Vis-curable intaglio ink compositions.

When the intaglio ink composition described herein is a UV-Vis-curable intaglio ink composition, the one or more drying or curing catalysts described here above are curing catalysts, also referred to as photoinitiators. Thus, when the intaglio ink composition described herein is a UV-Vis-curable intaglio ink composition, it comprises one or more one or more photoinitiators and may be effected in a number of ways. As known by those skilled in the art, the one or more photoinitiators are selected according to their absorption spectra and are selected to fit with the emission spectra of the radiation source. Depending on the monomers, oligomers or prepolymers used to prepare the one or more binders comprised in the UV-Vis-curable optically variable compositions described herein, different photoinitiators might be used. Suitable examples of free radical photoinitiators are known to those skilled in the art and include without limitation acetophenones, benzophenones, alpha-aminoketones, alpha-hydroxyketones, phosphine oxides and phosphine oxide derivatives and benzyldimethyl ketals. Suitable examples of cationic photoinitiators are known to those skilled in the art and include without limitation onium salts such as organic iodonium salts (e.g. diaryl iodoinium salts), oxonium (e.g. triaryloxonium salts) and sulfonium salts (e.g. triarylsulphonium salts). Other examples of useful photoinitiators can be found in standard textbooks such as "Chemistry & Technology of UV & EB Formulation for Coatings, Inks & Paints", Volume III, "Photoinitiators for Free Radical Cationic and Anionic Polymerization", 2nd edition, by J. V. Crivello & K. Dietliker, edited by G. Bradley and published in 1998 by John Wiley & Sons in association with SITA Technology Limited. The one or more photoinitiators comprised in the intaglio ink composition are preferably present in an amount from about 0.1 to about 20 weight percent, more preferably about 1 to about 15 weight percent, the weight percents being based on the total weight of the intaglio ink composition. When present, the one or more photoinitiators may be added to the intaglio ink composition either during the dispersing or mixing step of all other ingredients or may be added at a later stage, i.e. after the formation of the ink. It may also be advantageous to include one or more sensitizers in conjunction with the one or more photoinitiators in order to achieve efficient curing. Typical examples of suitable photosensitizers include without limitation isopropyl-thioxanthone (ITX), 1-chloro-2-propoxy-thioxanthone (CPTX), 2-chloro-thioxanthone (CTX) and 2,4-diethyl-thioxanthone (DETX) and mixtures thereof. When present, the one or more photosensitizers are preferably present in an amount from about 0.1% to about 15% by weight, more preferably about 0.5% to about 5% by weight, the weight % being based on the total weight of the intaglio ink composition.

When the intaglio ink composition of the present is an UV-Vis-curable intaglio ink composition, it may comprise one or more diluents. The optional diluents consist of one or more low molecular weights and low viscosity monomers or oligomers. Typically, the diluents comprise one or more reactive moieties that may react with the binder components during the UV-VIS-curing process. Thus, preferably the diluents are reactive diluents that comprise one, two or more functional moieties. The reactive diluents are used as viscosity cutting agents to reduce the viscosity of the intaglio ink composition. When present, the one or more diluents are preferably present in an amount from about 1% to about 30% by weight, more preferably about 10% to about 30% by weight, the weight % being based on the total weight of the intaglio ink composition.

Alternatively, dual-cure compositions may be used; these compositions combine thermal drying and radiation curing mechanisms. Typically, such compositions are similar to radiation curing compositions but include a volatile part constituted by water or by solvent. These volatile constituents are evaporated first using hot air or IR driers, and UV drying is then completing the hardening process.

Suitable fillers and extenders for intaglio ink compositions, said intaglio ink compositions being oxidatively drying intaglio ink compositions, UV-curable drying intaglio ink compositions or dual-cure compositions, are known in the art. Examples of suitable fillers and extenders are carbon fibers, talcs, micas (e.g. muscovite), wollastonites, calcinated clays, China clays, bentonites, kaolins, carbonates (e.g. calcium carbonate, sodium aluminum carbonate), silicates (e.g. magnesium silicate, aluminum silicate), sulfates (e.g. magnesium sulfate, barium sulphate), alumina hydrates, titanates (e.g. potassium titanate), titanium dioxides (e.g. anatase, rutile), montmorillonites, graphites, zinc sulfides, zinc whites, vermiculites, wood flours, quartz flours, natural fibers, synthetic fibers and combinations thereof. Preferably, the one or more fillers and/or extenders are selected from the group consisting of talcs, micas (preferably muscovite), wollastonites, calcinated clays, kaolins, silicates (preferably magnesium silicate and/or aluminum silicate), alumina hydrates, titanium dioxides (preferably anatase, rutile), China clays, bentonites, zinc whites, zinc sulfides, carbonates (preferably calcium carbonate), montmorillonites and combinations or mixtures thereof. The one or more fillers and/or extenders are preferably present in an amount from about 0.1% to about 45% by weight, more preferably from about 0.5% to about 40% by weight, and still more preferably from about 1% to about 30% by weight, the weight % being based on the total weight of the intaglio ink composition.

Suitable waxes for intaglio ink compositions, said intaglio ink compositions being either oxidatively drying intaglio ink compositions, UV-curable drying intaglio ink compositions or dual-cure compositions, are known in the art. A wax is for example a compound which imparts mar-resistance, reduced tack, improved slip and water repellency properties. The one or more waxes present in the intaglio ink composition are selected from the group consisting of synthetic waxes, petroleum waxes and natural waxes. Preferably the one or more waxes are selected from the group consisting of microcrystalline waxes, paraffin waxes, polyethylene waxes, polypropylene waxes, polyethylene amide waxes, polytetrafluoroethylene waxes, Fischer-Tropsch waxes, silicone fluid, beeswaxes, candelilla waxes, montan waxes, carnauba waxes and mixtures thereof. The one or more waxes are preferably present in the intaglio ink composition in an amount from about 1% to about 15% by weight, more preferably from about 2% to about 10% by weight, still more preferably from about 3% to about 8% by weight, the weight % being based on the total weight of the intaglio ink composition.

The intaglio ink compositions described herein, said intaglio ink compositions being oxidatively drying intaglio ink compositions, UV-curable drying intaglio ink compositions or dual-cure compositions, may further comprise one or more additives including without limitation compounds and materials which are used for adjusting physical, rheological and chemical parameters. The one or more additives are selected from the group consisting of plasticizers, slip agents, anti-oxidants, antifoaming agents, anti-settling agents, surfactants, stabilizers, solvents and mixtures thereof. Additives described herein may be present in amounts and in forms known in the art, including in the form of so-called nano-materials where at least one of the dimensions of the additives is in the range of 1 to 1000 nm (nanometers).

The multi-characteristic properties of an intaglio security feature or pattern printed with the intaglio ink composition described herein may be in particular easily tuned when the ink is printed with an intaglio plate engraved with furrow elements of various shapes. Thus, also described herein is a process for the printing of an intaglio security feature or pattern with the intaglio ink composition described herein while using an intaglio printing plate comprising furrow elements of at least two different groove shapes, i.e. furrow elements varying according to their profile, i.e. to the shape, the depth, the width, the average slope of the side walls, the edge shape and the space between two furrow elements. The shapes may be selected from the group consisting of dots, lines, stripes, 2-dimensional areas, cones and inversed pyramids.

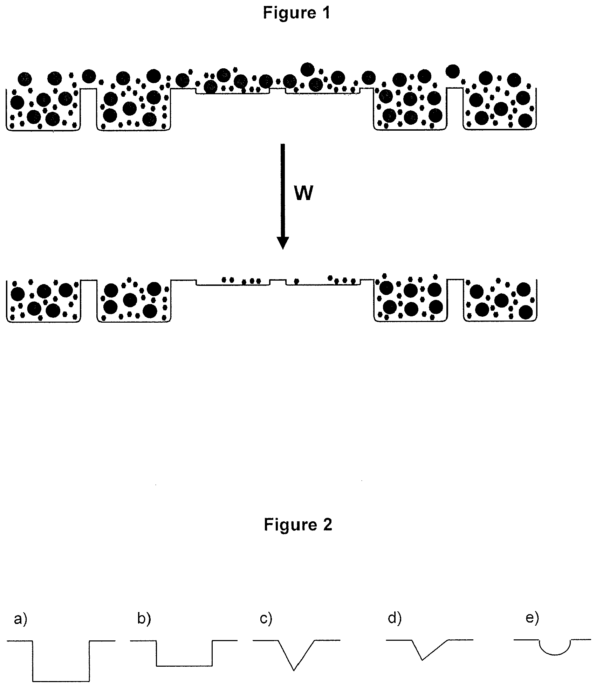

Depending on the profile of the furrow elements, the wiping direction and the wiping method, the wiping process of the excess intaglio ink composition induces a selective removal of the second component B) from some furrow elements, thereby leading to various relative concentrations of the first component A) and the second component B) within each furrow element. In particular, according to the depth of the furrow elements, the component B) consisting of large particles in comparison with the first particles and/or with the one or more dyes of component A) is selectively removed from shallow furrow elements during the wiping process W, as illustrated schematically in Figure 1. Without being bound by any theory, deep furrow elements tend to retain more easily large particles in comparison with shallower furrow elements. Thus, the concentration ratio of the compound A) to the compound B) will be higher in shallower furrow elements than in deep furrow elements; in deep furrow elements, the concentration of larger particles, i.e. particles of the compound B), will comparatively be higher than in the shallow furrow elements.

Hence, as used herein the term "selective wiping" refers to an inherent characteristic of the disclosed method that results in a discriminating removal of the particles of the second component B) from the shallow furrow elements. The term "selective wiping" does not refer to any kind of partial wiping of the intaglio cylinder surface. Any intaglio printing process involves a wiping off step of any ink excess present on the surface of the intaglio printing plate. In order to produce high quality intaglio feature, the wiping off process must ensure a complete removal of the ink excess from the un-engraved parts of the intaglio plate without removing any ink from the engraved parts. On an industrial intaglio printing press, the wiping off process may be adjusted by the machine parameters as known to the skilled person.

Suitable engraved intaglio plates may be manufactured by techniques known in the art. Manufacturing techniques of engraved intaglio plates include hand-graving and computer based technologies such as CTiP ("Computer to Intaglio Plate"), DLE ("Direct Laser Engraving") and FIT ("Fine Intaglio Technology"). References to manufacture processes may be found in e.g. WO 2012 143820 A1, EP 1 987 950 A2 or EP 0 805 957 B1. As the selective removal of the compound B) depends essentially on the various depth of the furrow elements, the accuracy of the intaglio printing plate furrow elements shape, in particular of their depth, is an essential requirement of the method. Hence, suitable engraved intaglio plates for the present invention are preferably produced by CTiP ("Computer to Intaglio Plate"), DLE ("Direct Laser Engraving") and FIT ("Fine Intaglio Technology").

According to one embodiment, the engraved intaglio plate comprises a first set and a second set of engraved furrow elements, said engraved furrow elements of the first set having a depth between about 5 $\mu$m and about 20 $\mu$m, preferably between about 5 $\mu$m and about 15 $\mu$m, and said engraved furrow elements of the second set having a depth between about 30 $\mu$m and about 100 $\mu$m, preferably between about 50 $\mu$m and about 85 $\mu$m.

According to another embodiment, the engraved intaglio plate comprises a first set, a second set and a third set of engraved furrow elements, said engraved furrow elements of the first set having a depth between about 5 $\mu$m and about 20 $\mu$m, preferably between about 5 $\mu$m and about 15 $\mu$m, said engraved furrow elements of the second set having a depth between about 30 $\mu$m and about 100 $\mu$m, preferably between about 50 $\mu$m and about 85 $\mu$m, and said engraved furrow elements of the third set having a depth between about 20 $\mu$m and about 50 $\mu$m, preferably between about 25 $\mu$m and about 45 $\mu$m, provided that engraved furrow elements of the first, the second and the third set have depth differing by at least 20% based on the depth of the engraved furrow elements of the first set.

Figures 2a-e schematically represent the cross-section of furrow elements engraved in an intaglio plate having different shapes and depths. The furrow elements may have a shape selected from the group consisting of dots, lines, stripes, 2-dimensional areas, cones and inversed pyramids. The furrow elements may have a cross-section independently selected from the group consisting of circle- or ellipse-section shapes, right-angle shapes, U-shapes and V-shapes. Figure 2a and Figure 2b schematically represent the cross-section of two furrow elements engraved in an intaglio plate having a right-angle shape and different depths. Figure 2c schematically represents the cross-section of a furrow element engraved in an intaglio plate having a symmetrical V-shape. Figure 2d schematically represents the cross-section of a furrow element engraved in an intaglio plate having an asymmetrical V-shape. Figure 2e schematically represents the cross-section of a furrow element engraved in an intaglio plate having a circle-section shape.

The intaglio ink compositions and the intaglio printing processes described herein are particularly useful to produce intaglio security features or patterns comprising two or more adjacent printed zones per area of 1cm$^2$, preferably a mosaic of three or more adjacent, preferably intertwined or alternating, zones per area of 1cm$^2$, wherein said zones exhibit different physical characteristics that cannot be obtained by using conventional inks and conventional intaglio printing plates. Intaglio security features or patterns composed of two or more adjacent printed zones per area of 1cm$^2$, preferably a mosaic of three or more adjacent, preferably intertwined or alternating, zones per area of 1cm$^2$ of different physical characteristics cannot be easily produced with a conventional intaglio printing device due to issues of inks contamination between inks having different physical characteristics or due to register issues.

In particular, the two or more adjacent printed zones per area of 1cm$^2$, preferably the mosaic of three or more adjacent, preferably intertwined or alternating, zones per area of 1cm$^2$, display at least one different physical characteristics, the physical characteristic being the total color difference $\Delta E^*_{(Z)}$ according to the CIE (1976) color index parameters, the machine readable properties, and/or combinations of the $\Delta E^*_{(Z)}$ according to the CIE (1976) color index parameters and machine readable properties.

It has been found that a visually improved, easily tunable and predictable control of the multi-characteristic properties, e.g. the multitone properties, of an intaglio security feature or pattern may be obtained by selecting an intaglio ink composition as described herein and printing said intaglio ink composition with an intaglio plate having furrow elements of different depths; thus an intaglio security feature or pattern comprising different zones of the intaglio security feature or pattern having a $\Delta E^*_{(Z)}$ of at least 2, preferably at least 4, more preferably at least 6, and still more preferably 10, may be obtained in an easily tunable and predictable manner. The $\Delta E^*_{(Z)}$ value is calculated according to the following equation:

$$\Delta E^*_{(Z)} = ((L^*_{(Z2)} - L^*_{(Z1)})^2 + (a^*_{(Z2)} - a^*_{(Z1)})^2 + (b^*_{(Z2)} - b^*_{(Z1)})^2)^{1/2}$$

with the parameters

$L^*_{(Z1)}$ representing the CIE (1976) L* value of the zone (Z1) of the intaglio security feature or pattern

$L^*_{(Z2)}$ representing the CIE (1976) L* value of the zone (Z2) of the intaglio security feature or pattern

$a^*_{(Z1)}$ representing the CIE (1976) a* value of the zone (Z1) of the intaglio security feature or pattern

$a^*_{(Z2)}$ representing the CIE (1976) a* value of the zone (Z2) of the intaglio security feature or pattern

$b^*_{(Z1)}$ representing the CIE (1976) b* value of the zone (Z1) of the intaglio security feature or pattern

$b^*_{(Z2)}$ representing the CIE (1976) b* value of the zone (Z2) of the intaglio security feature or pattern

Alternatively, the two or more adjacent printed zones per area of $1cm^2$, preferably the mosaic of three or more adjacent, preferably intertwined or alternating, zones per area of $1cm^2$, have different machine readable properties, such as different magnetic properties, different UV- or IR-absorption properties, different optically variable properties, different light polarization properties, different luminescence properties, or different electro-conductive properties.

According to exemplary embodiments of the present invention, the two or more adjacent printed zones per area of $1cm^2$, preferably the mosaic of three or more adjacent, preferably intertwined or alternating, zones per area of $1cm^2$, may have the following different machine readable properties:

a luminescence property and a magnetic property, or

a luminescence property and an UV-absorption property, or

a luminescence property and an IR-absorption property, or

a luminescence property and an optically variable property,

or a luminescence property and a light polarization property, or

a luminescence property and an electro-conductive property; or

a magnetic property and an electro-conductive property, or

a magnetic property and an IR-absorption property, or

a magnetic property and an UV-absorption property, or

a magnetic property and an optically variable property, or

a magnetic property and a light polarization property; or

an IR-absorption property and an UV-absorption property, or

an IR-absorption property and an optically variable property, or

an IR-absorption property and a light polarization property; or

an UV-absorption property and an optically variable property, or

an UV-absorption property and a light polarization property; or

a electro-conductive property and an IR-absorption property, or

a electro-conductive property and an UV-absorption property, or

an electro-conductive property and an optically variable property, or

an electro-conductive property and a light polarization property; or

an optically variable property and a light polarization property.

Alternatively, the two or more adjacent printed zones per area of 1cm$^2$, preferably the mosaic of three or more adjacent, preferably intertwined or alternating, zones per area of 1cm$^2$ are zones having a machine readable property preferably adjacent to, intertwined or alternating with zones without any machine readable property, for instance zones having an IR-absorption property and zones having no IR-absorption property, i.e. being IR-transparent; or alternatively, the preferably intertwined or alternating zones have $\Delta E^*_{(Z)}$ according to the CIE (1976) color index parameters being at least 2, preferably at least 4, more preferably at least 6, and still more preferably at least 10, such as to produce a multitone intaglio security feature or pattern. Such intaglio security features or patterns comprising entangled small zones having different physical characteristics are very difficult to prepare with traditional intaglio printing techniques, due to intaglio inks contamination and register issues.

The two or more adjacent printed zones per area of 1cm$^2$, preferably the mosaic of three or more adjacent, preferably intertwined or alternating, zones per area of 1cm$^2$ having different characteristics may have two different characteristics, (P1) and (P2), corresponding to two sets of furrow engravings in an intaglio printing plate having each a different depth; then the zones of the mosaic of three or more adjacent , preferably intertwined or alternating, zones per area of 1cm$^2$ may be schematically embodied by e.g. a (P1)-(P2)-(P1) pattern. Or alternatively, the zones of the mosaic of three or more adjacent, preferably intertwined or alternating, zones per area of 1cm$^2$ having different characteristics may have three or more, e.g. up to n different characteristics (P1), (P2), (P3), up to (Pn) corresponding to three or more, up to n, sets of furrow engravings with three or more, up to n, different depths; then the three or more preferably intertwined or alternating zones may be schematically embodied e.g. by a (P1)-(P2)-(P3)-...-(Pn) pattern, or by a (P1)-(P2)-(P1)-...-(P3)-...-(Pn) pattern, or by any further permutations of the (P1), (P2), (P3), up to (Pn) different characteristics.

Therefore, according to one aspect of the invention, the intaglio ink composition described herein is used to print with one single intaglio ink composition intaglio security features or patterns, in particular intaglio security features or patterns, exhibiting different characteristics such as different machine readable properties and/or different CIE (1976) color parameters within two or more adjacent printed zones per area of 1cm$^2$, preferably a mosaic of three or more adjacent, preferably intertwined or alternating, zones per area of 1cm$^2$, using an intaglio printing plate comprising engraved furrow elements of different depth depending on the engraved furrow elements depth.

Also described herein are uses of the intaglio ink composition described herein for the protection of a security document. Also described herein are uses of the intaglio security feature or pattern described herein for the protection of a security document.

Also described herein are uses of the first component A) and the second component B) described herein in an intaglio ink composition for the intaglio printing of a multi-characteristic security feature or pattern on a substrate.

Suitable substrates for the present invention include without limitation paper or other fibrous materials such as cellulose, paper-containing materials, plastic or polymer substrates, composite materials, metals or metalized materials, glasses, ceramics and combinations thereof. Typical examples of plastic or polymer substrates are substrates made of polypropylene (PP), polyethylene (PE), polycarbonate (PC), polyvinyl chloride (PVC) and polyethylene terephthalate (PET). Typical examples of composite materials include without limitation multilayer structures or laminates of paper and at least one plastic or polymer material.

Also described herein are uses of the intaglio ink composition described herein for the intaglio printing of a multi-characteristic security feature or pattern on a substrate.

Also described herein are security documents comprising at least one layer made from the intaglio ink composition described herein. Also described herein are security documents comprising the intaglio security feature or pattern described herein.

The term "security document" refers to a document which is usually protected against counterfeit or fraud by at least one security feature. Examples of security documents include without limitation value documents and value commercial goods. Typical example of value documents include without limitation banknotes, deeds, tickets, checks, vouchers, fiscal stamps and tax labels, agreements and the like, identity documents such as passports, identity cards, visas, bank cards, credit cards, transactions cards, access documents, entrance tickets and the like. Preferably, the security document described herein is selected from the group consisting of banknotes, identity documents, checks, vouchers, transaction cards, stamps and tax labels and more preferably the security document described herein is a banknote or an identity document.

Also described herein are uses of the intaglio ink composition described herein in combination with the engraved printing plate described herein for the intaglio printing of a multi-characteristic intaglio security feature or pattern so as to protect a security document preferably selected from the group consisting of banknotes, identity documents, checks, vouchers, transaction cards, stamps and tax labels against counterfeiting or fraud.

Also described herein are methods for protecting a security document, said method consisting of intaglio printing the intaglio ink composition described herein on the security document, preferably selected from the group consisting of banknotes, identity documents, checks, vouchers, transaction cards, stamps and tax labels against counterfeiting or fraud.

Also described herein are methods for protecting a security document, said method consisting of inking the engraved printing plate described herein with the intaglio ink composition described herein and transferring said intaglio ink composition to the security document, preferably selected from the group consisting of banknotes, identity documents, checks, vouchers, transaction cards, stamps and tax labels against counterfeiting or fraud.

A particularly advantageous property of the intaglio ink composition and of the process given by the present invention resides in the ability to provide an easily tunable and predictable way of printing multi-characteristic intaglio security features or patterns with a single intaglio ink composition in a single printing step thus reducing the number of required intaglio printing units and of chablons.

## EXAMPLES

The present invention is now described in greater detail with respect to non-limiting examples.

**Table 1**

| Intaglio Ink Composition I | Concentration [wt-%] |
|---|---|
| Phenolic resin (varnish) | 7.45 |
| Tung oil (varnish) | 7.45 |
| Uralac® AD 85 (binder) | 41.8 |
| CaCO$_3$ (filler) | 35.3 |
| Carnauba wax | 4.7 |
| Co-octoate (metal content 12%)(drier) | 0.6 |
| Dodecane (solvent) | 2.7 |

The wt-% are based on the total weight of the intaglio ink composition.

**Table 2 : Compounds A) and B)**

| Compound Class | Compound Name | Modal particle diameter | Color |
|---|---|---|---|
| Compound for Comparative Example | Carbon Black, Black Special 4A, from Degussa | <3 microns ($\mu$m) | Black |
| A) (Dye) | Macrolex® Yellow 6G1 Gran, from LanXess Solvent Yellow 129 dye | --- | Yellow |
| A) (first particle) | Paliogen® Black S0084 from BASF | <3 microns ($\mu$m) | Black |
| A) (first particle) | Irgalite® Orange F2G from Ciba SC Pigment Orange 34 | <3 microns ($\mu$m) | Orange |
| B) | Decosilk® 10 from Microchem PPMA microspheres | about 10 microns ($\mu$m) | Black |

**Table 3**

| Examples | C1 components [wt-%] | E1 components [wt-%] | E2 components [wt-%] | E3 components [wt-%] |
|---|---|---|---|---|
| Composition I | 90 wt-% | 83.8 wt-% | 83.7 wt-% | 80 wt-% |
| Dye A) | --- | --- | --- | Macrolex® Yellow 6G1 Gran 5 wt-% |
| Pigment A) | Carbon Black, Black Special 4A 10 wt-% | Paliogen® Schwarz S 0084 6.2 wt-% | Irgalite® Orange F2G 6.3 wt-% | |

(continued)

| Examples | C1 components [wt-%] | E1 components [wt-%] | E2 components [wt-%] | E3 components [wt-%] |
|---|---|---|---|---|
| Pigment B) | ---- | Decosilk® 10 10 wt-% | Decosilk® 10 10 wt-% | Decosilk® 10 15 wt-% |

The intaglio ink composition was prepared by thoroughly mixing the Composition I, the compounds A) and B) together by hand with a spatula. The resulting paste was grinded on a three-roll mill in two passes (first pass at 6 bars, second pass at 12 bars).

The intaglio plate used to print the examples is composed of three sets of furrow elements. The furrow elements have lines width of 200 microns and engravings depth of 10, 45 and 74 microns with a "U"-shape profile.

Each intaglio ink composition described in Table 3 (compositions according to the present invention (E1-E3) and comparative composition (C1)) was printed with an Ormag intaglio proof-press. The intaglio ink composition was applied on the intaglio plate with a polymer hand-roller. Any excess of the intaglio ink composition was wiped off manually with paper in one single pass. The intaglio ink composition was printed on standard cotton paper substrate used for banknote applications (Cotton Banknote Paper from Louisenthal).

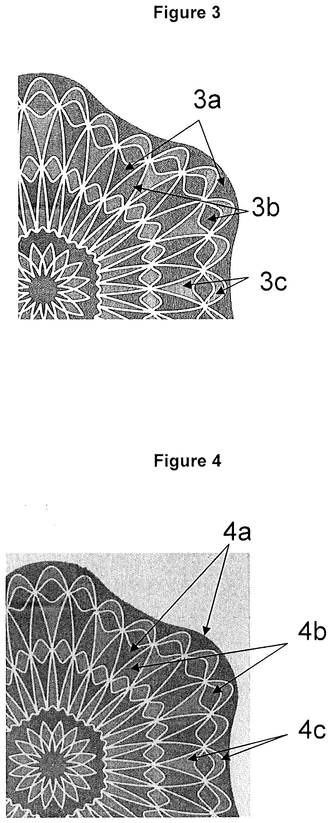

Figure 3 represents a picture taken with a conventional camera of the comparative example (C1) of a multitone intaglio feature printed with an intaglio ink comprising a plurality of black carbon pigment particles with a mono-modal size distribution (Carbon Black Special 4A, modal particles diameter of less than 3 microns). Figure 4 represents a picture taken with an IR-viewer (IR-conversion viewer spectral sensitivity 350-1300 nm fitted with a BW filter F-PRO 28-093) of the comparative example C1. In Figure 3, three different shades of black may be recognized corresponding to the intertwined or alternating zones within a small area of less than 1 cm$^2$ (dark black zones 3a corresponding to deep furrow elements (74 $\mu$m), medium black zones 3b corresponding to medium furrow elements (45 $\mu$m), light black zones 3c corresponding to shallow furrow elements (10 $\mu$m)). The multitone characteristic of the intaglio feature may be recognized although the contrast between the zones 3a, 3b and 3c is not strong. In Figure 4, the corresponding zones 4a, 4b and 4c are all visible as black zones, corresponding to strongly absorbing zones. The zones 4a, 4b and 4c are machine readable. Thus, the example of Figure 3 is a multitone intaglio feature prepared with an intaglio ink composition comprising only one type of particles having a mono-modal particles size distribution; due to the mono-modal particles size distribution, the multitone properties of the intaglio feature are not predictable and not adjustable as no selective wiping of any particles may be performed. Hence in the comparative example C1, the intertwined or alternating zones 4a, 4b and 4c have different CIE (1976) parameters (multitone intaglio feature); but the zones 4a, 4b and 4c may not be differentiated from each other by a device detecting any IR-absorption as machine readable properties.

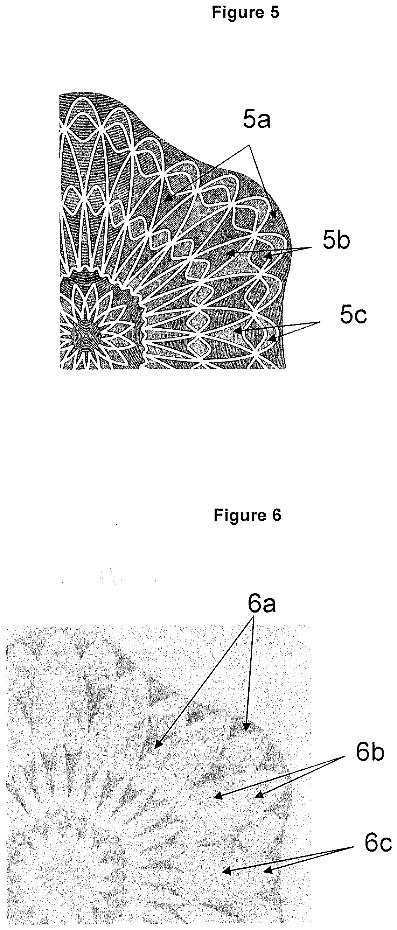

Figure 5 represents a picture taken with a conventional camera of an example according to the present invention (E1) of a multi-characteristic intaglio security feature or pattern. Figure 6 represents a picture taken with the above described IR-viewer of the multi-characteristic intaglio security feature or pattern of the example E1. The zones 5a in Figure 5 and 6a in Figure 6 are the zones corresponding to deep furrow elements (74 $\mu$m); the zones 5b in Figure 5 and 6b in Figure 6 are the zones corresponding to medium furrow elements (45 $\mu$m); and the zones 5c in Figure 5 and 6c in Figure 6 are the zones corresponding to shallow furrow elements (10 $\mu$m). The multi-characteristic intaglio security feature or pattern of the example E1 was printed with an intaglio ink composition comprising i) a compound A) being a plurality of pigment particles (Paliogen® Black S0084) with a modal particle diameter < 3 microns and ii) a compound B) being a plurality of pigment particles (Decosilk® 10) with a modal particle diameter of about 10 microns. The compound A) is an IR-transparent material while the compound B) is an IR-absorbing material. In Figure 5, three different shades of black may be recognized corresponding to the intertwined or alternating zones within a small area of less than 1 cm$^2$ (dark black zones 5a, medium black zones 5b, light black zones 5c). The multitone characteristic of the intaglio security feature of E1, corresponding to different CIE (1976) parameters of the zones 5a, 5b and 5c, is embodied by the different black shades. In Figure 6, the corresponding zones 6a, 6b and 6c may be easily distinguished as the IR-absorption properties of the zones 6a, 6b and 6c are different: the zones 6a, corresponding to the deep furrow elements (74 $\mu$m) containing the intaglio ink composition comprising the same, or approximately the same, ratio of the compound A) and the compound B) as in the intaglio ink composition initially applied on the intaglio plate, strongly absorb in the IR-spectrum and are thus machine readable; the zones 6b correspond to the medium furrow elements (45 $\mu$m) containing the intaglio ink composition comprising, as a result of the wiping process, a reduced amount the compound B) and approximately the same amount of compound A) as compared to the intaglio ink composition initially applied on the intaglio plate, and thus the zones 6b absorb slightly in the IR-spectrum and are thus machine readable, although a sensitive detector may be required; the zones 6c correspond to the shallow furrow elements (10 $\mu$m) containing the intaglio ink composition comprising as a result of the wiping process, almost only the compound A), and thus the zones 6c do not absorb in the IR-spectrum, i.e. the zones 6c are IR-transparent and are therefore not detectable by a device detecting IR-absorption as machine readable properties. Thus in example E1, the intertwined or alternating zones 6a, 6b and 6c are multi-characteristic and may be differentiated by their distinctive machine readable properties and also by their different CIE (1976) parameters.

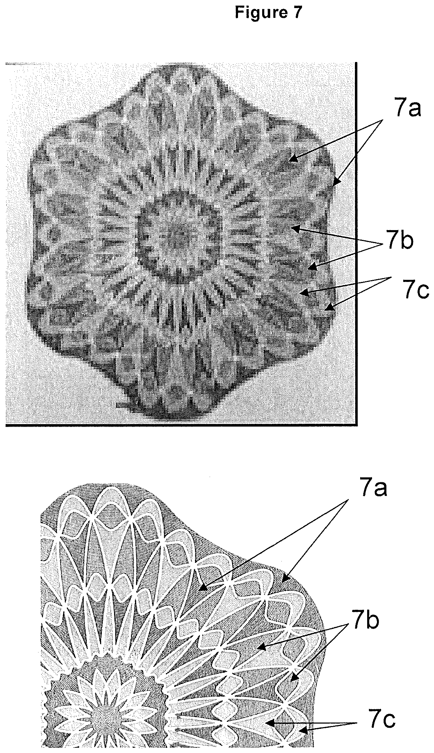

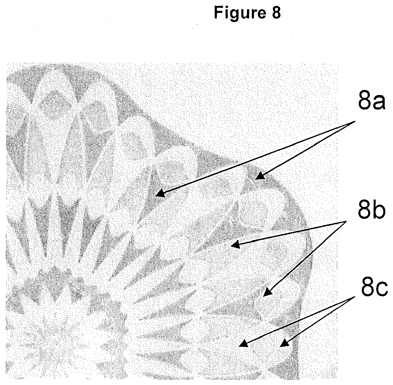

Figure 7 represents a picture taken with a conventional camera of an example according to the present invention (E2) of a multi-characteristic intaglio security feature or pattern according to the present invention. Figure 8 represents a picture taken with an IR-camera of the multi-characteristic intaglio security feature or pattern of the E2. The zones 7a in Figure 7 and 8a in Figure 8 are the zones corresponding to deep furrow elements (74 $\mu$m); the zones 7b in Figure 7 and 8b in Figure 8 are the zones corresponding to medium furrow elements (45 m); the zones 7c in Figure 7 and 8c in Figure 8 are the zones corresponding to shallow furrow elements (10 $\mu$m). The multi-characteristic intaglio security feature or pattern of E2 was printed with an intaglio ink composition comprising i) a compound A) being a plurality of pigment particles (Irgalite® Orange F2G) with a modal particle diameter < 3 microns and ii) a compound B) being a plurality of pigment particles (Decosilk® 10) with a modal particle diameter of about 10 microns. The compound A) is an IR-transparent material while the compound B) is an IR-absorbing material. In Figure 7, the multitone characteristic of the intaglio security feature are embodied by the three different shades within the intertwined or alternating zones: the zones 7a are brown; the zones 7b are orange and the zones 7c are light orange. In Figure 8, the corresponding zones 8a, 8b and 8c may be easily distinguished as the IR-absorption properties of the zones 8a, 8b and 8c are different: the zones 8a, corresponding to the deep furrow elements (74 $\mu$m) containing the intaglio ink composition comprising the same, or approximately the same, ratio of the compound A) and the compound B) as in the intaglio ink composition initially applied on the intaglio plate, strongly absorb in the IR-spectrum and are thus machine readable; the zones 8b correspond to the medium furrow elements (45 $\mu$m) containing the intaglio ink composition comprising, as a result of the wiping process, a reduced amount the compound B) and approximately the same amount of compound A) as compared to the intaglio ink composition initially applied on the intaglio plate, and thus the zones 8b absorb slightly in the IR-spectrum and are thus machine readable although a sensitive detector may be required; the zones 8c correspond to the shallow furrow elements (10 $\mu$m) containing the intaglio ink composition comprising as a result of the wiping process, almost only the compound A), and thus the zones 8c do not absorb in the IR-spectrum, i.e. the zones 8c are IR-transparent and are therefore not detectable by a device detecting IR-absorption as machine readable properties. Thus, in example E2, the intertwined or alternating zones 8a, 8b and 8c are multi-characteristic and may be differentiated by their distinctive machine readable properties and also by their different CIE (1976) parameters.

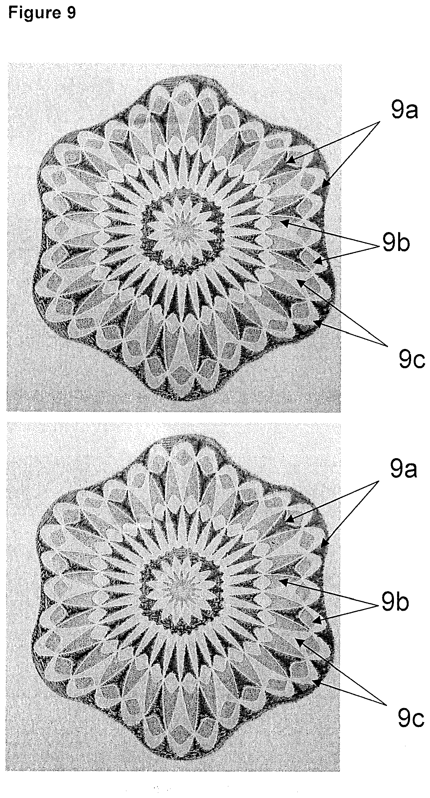

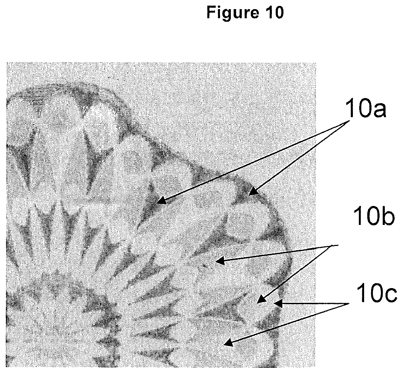

Figure 9 represents a picture taken with a conventional camera of an example according to the present invention (E3) of a multi-characteristic intaglio security feature or pattern according to the present invention. Figure 10 represents a picture taken with an IR-camera of the multi-characteristic intaglio security feature or pattern of the example E3. The zones 9a in Figure 9 and 10b in Figure 10 are the zones corresponding to deep furrow elements (74 $\mu$m); the zones 9b in Figure 9 and 10b in Figure 10 are the zones corresponding to medium furrow elements (45 $\mu$m); the zones 9c in Figure 9 and 10c in Figure 10 are the zones corresponding to shallow furrow elements (10 $\mu$m). The multi-characteristic intaglio security feature or pattern of E3 was printed with an intaglio ink comprising i) a compound A) being a dye (Macrolex ® Yellow 6G1) and ii) a compound B) being a plurality of pigment particles (Decosilk® 10) with a modal particle diameter of about 10 microns. The compound A) is an IR-transparent material while the compound B) is an IR-absorbing material. In Figure 9, the multitone characteristic of the intaglio security feature are embodied by the three different shades within the intertwined or alternating zones: the zones 9a are dark green; the zones 9b are green and the zones 9c are yellow. In Figure 10, the corresponding zones 10a, 10b and 10c may be easily distinguished as the IR-absorption properties of the zones 10a, 10b and 10c are different: the zones 10a, corresponding to the deep furrow elements (74 $\mu$m) containing the intaglio ink composition comprising the same, or approximately the same, ratio of the compound A) and the compound B) as in the intaglio ink composition initially applied on the intaglio plate, strongly absorb in the IR-spectrum and are thus machine readable; the zones 10b correspond to the medium furrow elements (45 $\mu$m) containing the intaglio ink composition comprising, as a result of the wiping process, a reduced amount the compound B) and approximately the same amount of compound A) as compared to the intaglio ink composition initially applied on the intaglio plate; the zones 10b absorb slightly in the IR-spectrum and are thus machine readable although a sensitive detector may be required; the zones 10c correspond to the shallow furrow elements (10 $\mu$m) containing the intaglio ink composition comprising as a result of the wiping process, almost only the compound A); the zones 10c do not absorb in the IR-spectrum, i.e. the zones 10c are IR-transparent and are therefore not detectable by a device detecting IR-absorption as machine readable properties. Thus in E3, the intertwined or alternating zones 10a, 10b and 10c are multi-characteristic and may be differentiate by their distinctive machine readable properties and also by their different CIE (1976) parameters.

Compared to the prior art, the intaglio ink composition and the method described herein are suitable to produce in a predictable and controlled manner intaglio features or patterns with multi-characteristic properties within two or more adjacent zones per area of 1 cm$^2$ or within a mosaic of three or more adjacent zones per area of 1 cm$^2$, preferably within a mosaic of three or more intertwined or alternating zones per area of 1cm$^2$.

Contrary to the prior art wherein the multi-characteristic properties, in particular the multitone properties, of an intaglio feature is neither predictable nor tunable due to the mono-modal distribution of the particle size, the method described herein takes advantage of intaglio ink compositions comprising compounds A) and B) having different particle size, and of intaglio printing plates comprising various furrow elements, in a controlled manner, to produce intaglio features or patterns with multi-characteristic properties.

## Claims

1. An intaglio ink composition comprising a first component A) and a second component B), wherein the first component A) is selected from the group consisting of

    i) about 0.1% to about 40 % by weight of a plurality of first particles having a modal particle diameter between about 1 nm and about 3 $\mu$m, said plurality of first particles may be a material having machine readable properties, preferably selected from the group consisting of magnetic properties, UV- or IR-absorbing properties, optically variable properties, light polarization properties, electro-conductive properties, luminescent properties and combinations thereof, ii) about 1 to about 20 % by weight of one or more dyes, said one or more dyes may be a material having machine readable properties preferably selected from the group consisting of IR-absorbing properties, luminescent properties and combinations thereof, and iii) combinations thereof,

    and the second component B) is about 0.1% to about 40 % by weight of a plurality of second particles having a modal particle diameter between about 6 $\mu$m and about 25 $\mu$m, said plurality of second particles may be a material having machine readable properties preferably selected from the group consisting of magnetic properties, UV- or IR-absorbing properties, optically variable properties, light polarization properties, electro-conductive properties and luminescent properties and combinations thereof,
    wherein the first component A) and the second component B) exhibit at least one different characteristic, said characteristic being selected from the group consisting of the CIE (1976) color index parameters, machine readable properties, and a combination thereof,
    the % by weight being based on the total weight of the intaglio ink composition.

2. The intaglio ink composition according to claim 1, wherein the first component A) is a plurality of first particles having a modal particle diameter between about 0.1 $\mu$m and about 3 $\mu$m, and the second component B) is a plurality of second particles having a modal particle diameter between about 6 $\mu$m and about 25 $\mu$m.

3. The intaglio ink composition according to claim 1 or 2, wherein the first component A) and second component B) are two different machine readable materials.

4. The intaglio ink composition according to any of the preceding claims, wherein the first component A) and the second component B) have different CIE (1976) color index parameters **characterized by** their total color difference $\Delta E^*_{A)-B)}$ being at least 2, preferably at least 4, more preferably at least 6, and still more preferably 10.

5. The intaglio ink composition according to any of the preceding claims, wherein the intaglio ink composition is selected from the group consisting of oxidative drying ink compositions, radiation-curable ink compositions and mixtures thereof.

6. A process for printing a security feature or pattern on at least one side of a substrate with the intaglio ink composition recited in any of claims 1 to 5, said process comprising the steps of:

    i) inking an intaglio engraved printing plate with said intaglio ink composition, said intaglio engraved printing plate comprising at least a first set of engraved furrow elements and at least a second set of engraved furrow elements, said engraved furrow elements of the first set and said engraved furrow elements of the second set having a different depth,
    ii) wiping any excess of the intaglio ink composition from the intaglio engraved printing plate,
    iii) printing the security feature or pattern with the intaglio engraved printing plate by applying the intaglio ink composition onto the substrate, and
    iv) curing the intaglio ink composition by oxidative curing and/or by UV-Vis-radiation .

7. The process according to claim 6, wherein the engraved furrow elements of the first set and the engraved furrow elements of the second set have a shape independently selected from the group consisting of dots, lines, stripes, 2-dimensional areas, cones and inversed pyramids.

8. The process according to claim 6 or 7, wherein the engraved furrow elements of the first set and the engraved furrow elements of the second set have a cross-section independently selected from the group consisting of circle- or ellipse-section shapes, right-angle shapes, U-shapes and V-shapes.

9. The process according to any one of claims 6 to 8, wherein

i) the engraved furrow elements of the first set have a depth between about 5 $\mu$m and about 20 $\mu$m, preferably between about 5 $\mu$m and about 15 $\mu$m, and
ii) the engraved furrow elements of the second set have a depth between about 30 $\mu$m and about 100 $\mu$m, preferably between about 50 $\mu$m and about 85 $\mu$m.

10. The process according to any one of claims 6 to 9, wherein the intaglio engraved printing plate further comprises a third set of engraved furrow elements having a shape selected form the group consisting of dots, lines, stripes, 2-dimensional areas, cones and inversed pyramids and having a cross-section selected from the group consisting of circle- or ellipse-section shapes, right-angle shapes, U-shapes and V-shapes, said engraved furrow elements of the third set having a depth between about 20 $\mu$m and about 50 $\mu$m, preferably between about 25 $\mu$m and about 45 $\mu$m, provided that the engraved furrow elements of the first, the second and the third set have depths differing by at least 20% based on the depth of the engraved furrow elements of the first set.

11. A security feature or pattern printed according to any one of the process recited in any one of claims 6 to 10.

12. The security feature or pattern according to claim 11, wherein the intaglio security feature or pattern comprises a mosaic of three or more adjacent, preferably intertwined or alternating, zones per area of 1cm$^2$, said three or more zones having different CIE (1976) color index parameters **characterized by** their total color difference $\Delta E^*_{(Z)}$ and/or differing by at least one parameter selected from the group consisting of magnetic properties, UV- or IR-absorbing properties, optically variable properties, light polarization properties, electro-conductive properties, luminescent properties and combinations thereof.

13. A security document comprising the intaglio security feature or pattern recited in any of claims 11 or 12.

14. Use of the intaglio ink composition recited in any one of claims 1 to 5 for the intaglio printing of a multi-characteristic intaglio security feature or pattern, preferably according to the process recited in one of claims 6 to 9, so as to protect a security document preferably selected from the group consisting of banknotes, identity documents, checks, vouchers, transaction cards, stamps and tax labels against counterfeiting or fraud.

15. Use of the security feature or pattern recited in any of claims 11 or 12 for the protection of a security document preferably selected from the group consisting of banknotes, identity documents, checks, vouchers, transaction cards, stamps and tax labels against counterfeiting or fraud.

**Patentansprüche**

1. Tiefdruckfarbenzusammensetzung, umfassend eine erste Komponente A) und eine zweite Komponente B), wobei die erste Komponente A) ausgewählt ist aus der Gruppe, die besteht aus

i) ungefähr 0,1% bis ungefähr 40% Gewichtsanteilen von einer Vielzahl von ersten Partikeln mit einem Modalpartikeldurchmesser zwischen ungefähr 1 nm und ungefähr 3 $\mu$m, wobei die Vielzahl von ersten Partikeln ein Material mit maschinenlesbaren Eigenschaften sein kann, bevorzugt ausgewählt aus der Gruppe bestehend aus magnetischen Eigenschaften, UV- oder IR-absorbierenden Eigenschaften, optisch variablen Eigenschaften, Lichtpolarisationseigenschaften, elektrischen Leitungseigenschaften, Lumineszenzeigenschaften und Kombinationen davon, ii) ungefähr 1 bis ungefähr 20% Gewichtsanteilen von einem oder mehreren Farbstoffen, wobei der eine oder die mehreren Farbstoffe ein Material mit maschinenlesbaren Eigenschaften sein können, bevorzugt ausgewählt aus der Gruppe bestehend aus IR-absorbierenden Eigenschaften, Lumineszenzeigenschaften und Kombinationen davon und iii) Kombinationen davon,

und die zweite Komponente B) ungefähr 0,1% bis ungefähr 40% Gewichtsanteile von einer Vielzahl von zweiten Partikeln mit einem Modalpartikeldurchmesser zwischen ungefähr 6 $\mu$m und ungefähr 25 $\mu$m aufweist, wobei die Vielzahl von zweiten Partikeln ein Material mit maschinenlesbaren Eigenschaften sein kann, bevorzugt ausgewählt aus der Gruppe bestehend aus magnetischen Eigenschaften, UV- oder IR-absorbierenden Eigenschaften, optisch variablen Eigenschaften, Lichtpolarisationseigenschaften, elektrischen Leitungseigenschaften und Lumineszenzeigenschaften und Kombinationen davon,

wobei die erste Komponente A) und die zweite Komponente B) mindestens eine unterschiedliche Eigenschaft aufweisen, wobei die Eigenschaft ausgewählt ist aus der Gruppe bestehend aus den CIE(1976)-Farbindexparametern, maschinenlesbaren Eigenschaften und einer Kombination davon,

wobei die %-Gewichtsanteile auf dem Gesamtgewicht der Tiefdruckfarbenzusammensetzung basieren.

2. Tiefdruckfarbenzusammensetzung nach Anspruch 1, wobei die erste Komponente A) eine Vielzahl von ersten Partikeln mit einem Modalpartikeldurchmesser zwischen ungefähr 0,1 $\mu$m und ungefähr 3 $\mu$m ist und die zweite Komponente B) eine Vielzahl von zweiten Partikeln mit einem Modalpartikeldurchmesser zwischen ungefähr 6 $\mu$m und ungefähr 25 $\mu$m ist.

3. Tiefdruckfarbenzusammensetzung nach Anspruch 1 oder 2, wobei die erste Komponente A) und die zweite Komponente B) zwei verschiedene maschinenlesbare Materialien sind.

4. Tiefdruckfarbenzusammensetzung nach einem der vorhergehenden Ansprüche, wobei die erste Komponente A) und die zweite Komponente B) unterschiedliche CIE(1976)-Farbindexparameter aufweisen, **dadurch gekennzeichnet, dass** deren Gesamtfarbdifferenz $\Delta E^*_{A)-B)}$ mindestens 2, bevorzugt mindestens 4, besonders bevorzugt mindestens 6 und weiter besonders bevorzugt 10 ist.

5. Tiefdruckfarbenzusammensetzung nach einem der vorhergehenden Ansprüche, wobei die Tiefdruckfarbenzusammensetzung ausgewählt ist aus der Gruppe bestehend aus oxidativ trocknenden Farbzusammensetzungen, strahlungshärtenden Farbzusammensetzungen und Mischungen davon.

6. Verfahren zum Drucken eines Sicherheitsmerkmals oder -musters auf mindestens eine Seite eines Substrats mit der Tiefdruckfarbenzusammensetzung gemäss einem der Ansprüche 1 bis 5, wobei das Verfahren die folgenden Schritte umfasst:

(i) Einfärben einer gravierten Tiefdruckdruckplatte mit der Tiefdruckfarbenzusammensetzung, wobei die gravierte Tiefdruckdruckplatte mindestens einen ersten Satz von gravierten Furchenelementen und mindestens einen zweiten Satz von gravierten Furchenelementen umfasst, wobei die gravierten Furchenelemente des ersten Satzes und die gravierten Furchenelemente des zweiten Satzes eine unterschiedliche Tiefe aufweisen,

(ii) Abwischen jeglichen Überschusses der Tiefdruckfarbenzusammensetzung von der gravierten Tiefdruckdruckplatte,

(iii) Drucken des Sicherheitsmerkmals oder -musters mit der gravierten Tiefdruckdruckplatte durch Aufbringen der Tiefdruckfarbenzusammensetzung auf das Substrat, und

(iv) Aushärten der Tiefdruckfarbenzusammensetzung durch oxidatives Aushärten und/oder durch UV-Vis-Strahlung.

7. Verfahren nach Anspruch 6, wobei die gravierten Furchenelemente des ersten Satzes und die gravierten Furchenelemente des zweiten Satzes eine Form aufweisen, die unabhängig ausgewählt ist aus der Gruppe bestehend aus Punkten, Linien, Streifen, 2-dimensionalen Flächen, Kegeln und inversen Pyramiden.

8. Verfahren nach Anspruch 6 oder 7, wobei die gravierten Furchenelemente des ersten Satzes und die gravierten Furchenelemente des zweiten Satzes einen Querschnitt aufweisen, der unabhängig ausgewählt ist aus der Gruppe bestehend aus Kreis- oder Ellipsenabschnittformen, rechtwinkligen Formen, U-Formen und V-Formen.

9. Verfahren nach einem der Ansprüche 6 bis 8, wobei

(i) die gravierten Furchenelemente des ersten Satzes eine Tiefe zwischen ungefähr 5 $\mu$m und ungefähr 20 $\mu$m, bevorzugt zwischen ungefähr 5 $\mu$m und ungefähr 15 $\mu$m aufweisen, und

(ii) die gravierten Furchenelemente des zweiten Satzes eine Tiefe zwischen ungefähr 30 $\mu$m und ungefähr 100 $\mu$m, bevorzugt zwischen ungefähr 50 $\mu$m und ungefähr 85 $\mu$m aufweisen.

10. Verfahren nach einem der Ansprüche 6 bis 9, wobei die gravierte Tiefdruckdruckplatte ferner einen dritten Satz von gravierten Furchenelementen umfasst, welche eine Form aufweisen, die ausgewählt ist aus der Gruppe bestehend aus Punkten, Linien, Streifen, 2-dimensionalen Flächen, Kegeln und inversen Pyramiden, und einen Querschnitt aufweisen, der ausgewählt ist aus der Gruppe bestehend aus Kreis- oder Ellipsenabschnittformen, rechtwinkligen Formen, U-Formen und V-Formen, wobei die gravierten Furchenelemente des dritten Satzes eine Tiefe zwischen ungefähr 20 $\mu$m und ungefähr 50 $\mu$m, bevorzugt zwischen ungefähr 25 $\mu$m und ungefähr 45 $\mu$m aufweisen, mit der Massgabe, dass die gravierten Furchenelemente des ersten, des zweiten und des dritten Satzes Tiefen aufweisen, die sich um mindestens 20% unterscheiden, basierend auf der Tiefe der gravierten Furchenelemente des ersten Satzes.

**11.** Sicherheitsmerkmal oder -muster gedruckt nach einem der Verfahren gemäss einem der Ansprüche 6 bis 10.

**12.** Sicherheitsmerkmal oder -muster nach Anspruch 11, wobei das Tiefdrucksicherheitsmerkmal oder -muster ein Mosaik von drei oder mehr angrenzenden, bevorzugt verflochtenen oder alternierenden, Zonen pro Fläche von 1cm$^2$ umfasst, wobei drei oder mehr Zonen unterschiedliche CIE(1976)-Farbindexparameter aufweisen, **gekennzeichnet durch** deren Gesamtfarbdifferenz $\Delta E^*_{(Z)}$, und/oder sich in mindestens einem Parameter unterscheiden, der ausgewählt ist aus der Gruppe bestehend aus magnetischen Eigenschaften, UV- oder IR-absorbierenden Eigenschaften, optisch variablen Eigenschaften, Lichtpolarisationseigenschaften, elektrischen Leitungseigenschaften, Lumineszenzeigenschaften und Kombinationen davon.

**13.** Sicherheitsdokument umfassend das Tiefdrucksicherheitsmerkmal oder -muster gemäss einem der Ansprüche 11 oder 12.

**14.** Verwendung der Tiefdruckfarbenzusammensetzung gemäss einem der Ansprüche 1 bis 5 zum Tiefdruck eines Multieigenschaften-Tiefdrucksicherheitsmerkmals oder -musters, bevorzugt gemäß dem Verfahren nach einem der Ansprüche 6 bis 9, um somit ein Sicherheitsdokument gegen Fälschung oder Betrug zu schützen, das bevorzugt ausgewählt ist aus der Gruppe bestehend aus Banknoten, Identitätsdokumenten, Schecks, Gutscheinen, Transaktionskarten, Briefmarken und Steuermarken.

**15.** Verwendung des Sicherheitsmerkmals oder -musters gemäss einem der Ansprüche 11 oder 12 für den Schutz eines Sicherheitsdokuments gegen Fälschung oder Betrug, das bevorzugt ausgewählt ist aus der Gruppe bestehend aus Banknoten, Identitätsdokumenten, Schecks, Gutscheinen, Transaktionskarten, Briefmarken und Steuermarken.

**Revendications**

**1.** Composition d'encre taille-douce comprenant un premier constituant A) et un deuxième constituant B), dans laquelle le premier constituant A) est choisi dans le groupe constitué par

i) environ 0,1 % à environ 40 % en poids d'une pluralité de premières particules ayant un diamètre modal de particules entre environ 1 nm et environ 3 $\mu$m, ladite pluralité de premières particules peut être un matériau ayant des propriétés lisibles par machine, de préférence choisies dans le groupe constitué par des propriétés magnétiques, des propriétés d'absorption UV ou IR, des propriétés optiquement variables, des propriétés de polarisation de la lumière, des propriétés électroconductrices, des propriétés luminescentes et des combinaisons de celles-ci, ii) environ 1 à environ 20 % en poids d'un ou plusieurs colorants, ledit ou lesdits colorants peuvent être un matériau ayant des propriétés lisibles par machine de préférence choisies dans le groupe constitué par des propriétés d'absorption IR, des propriétés luminescentes et des combinaisons de celles-ci, et iii) les combinaisons de ceux-ci,

et le deuxième constituant B) est environ 0,1 % à environ 40 % en poids d'une pluralité de deuxièmes particules ayant un diamètre modal de particules entre environ 6 $\mu$m et environ 25 $\mu$m, ladite pluralité de deuxièmes particules peut être un matériau ayant des propriétés lisibles par machine de préférence choisies dans le groupe constitué par des propriétés magnétiques, des propriétés d'absorption UV ou IR, des propriétés optiquement variables, des propriétés de polarisation de la lumière, des propriétés électroconductrices et des propriétés luminescentes et des combinaisons de celles-ci,

dans laquelle le premier constituant A) et le deuxième constituant B) présentent au moins une caractéristique différente, ladite caractéristique étant choisie dans le groupe constitué par les paramètres d'indice de couleur CIE (1976), des propriétés lisibles par machine, et une combinaison de ceux-ci, le % en poids étant basé sur le poids total de la composition d'encre taille-douce.

**2.** Composition d'encre taille-douce selon la revendication 1, dans laquelle le premier constituant A) est une pluralité de premières particules ayant un diamètre modal de particules entre environ 0,1 $\mu$m et environ 3 $\mu$m, et le deuxième constituant B) est une pluralité de deuxièmes particules ayant un diamètre modal de particules entre environ 6 $\mu$m et environ 25 $\mu$m.

**3.** Composition d'encre taille-douce selon la revendication 1 ou 2, dans laquelle le premier constituant A) et le deuxième constituant B) sont deux matériaux lisibles par machine différents.

**4.** Composition d'encre taille-douce selon l'une quelconque des revendications précédentes, dans laquelle le premier constituant A) et le deuxième constituant B) ont des paramètres d'indice de couleur CIE (1976) différents **caractérisés par** leur différence de couleur totale $\Delta E^*_{A)-B)}$ valant au moins 2, de préférence au moins 4, mieux au moins 6, et mieux encore 10.

**5.** Composition d'encre taille-douce selon l'une quelconque des revendications précédentes, la composition d'encre taille-douce étant choisie dans le groupe constitué par les compositions d'encre à séchage oxydatif, les compositions d'encre durcissables par rayonnement et les mélanges de celles-ci.

**6.** Procédé d'impression d'un attribut ou motif de sécurité sur au moins un côté d'un substrat avec la composition d'encre taille-douce définie dans l'une quelconque des revendications 1 à 5, ledit procédé comprenant les étapes consistant à :

    i) encrer une plaque d'impression taille-douce gravée avec ladite composition d'encre taille-douce, ladite plaque d'impression taille-douce gravée comprenant au moins un premier ensemble d'éléments gravés en sillons et au moins un deuxième ensemble d'éléments gravés en sillons, lesdits éléments gravés en sillons du premier ensemble et lesdits éléments gravés en sillons du deuxième ensemble ayant une profondeur différente,
    ii) essuyer tout excès de la composition d'encre taille-douce de la plaque d'impression taille-douce gravée,
    iii) imprimer l'attribut ou motif de sécurité avec la plaque d'impression taille-douce gravée en appliquant la composition d'encre taille-douce sur le substrat, et
    iv) durcir la composition d'encre taille-douce par durcissement oxydatif et/ou par rayonnement UV-Vis.

**7.** Procédé selon la revendication 6, dans lequel les éléments gravés en sillons du premier ensemble et les éléments gravés en sillons du deuxième ensemble ont une forme indépendamment choisie dans le groupe constitué par des points, des lignes, des rayures, des zones bidimensionnelles, des cônes et des pyramides inversées.

**8.** Procédé selon la revendication 6 ou 7, dans lequel les éléments gravés en sillons du premier ensemble et les éléments gravés en sillons du deuxième ensemble ont une section transversale indépendamment choisie dans le groupe constitué par les formes de section circulaire ou elliptique, les formes à angle droit, les formes en U et les formes en V.

**9.** Procédé selon l'une quelconque des revendications 6 à 8, dans lequel

    i) les éléments gravés en sillons du premier ensemble ont une profondeur entre environ 5 $\mu$m et environ 20 $\mu$m, de préférence entre environ 5 $\mu$m et environ 15 $\mu$m, et
    ii) les éléments gravés en sillons du deuxième ensemble ont une profondeur entre environ 30 $\mu$m et environ 100 $\mu$m, de préférence entre environ 50 $\mu$m et environ 85 $\mu$m.

**10.** Procédé selon l'une quelconque des revendications 6 à 9, dans lequel la plaque d'impression taille-douce gravée comprend en outre un troisième ensemble d'éléments gravés en sillons ayant une forme choisie dans le groupe constitué par des points, des lignes, des rayures, des zones bidimensionnelles, des cônes et des pyramides inversées et ayant une section transversale choisie dans le groupe constitué par les formes de section circulaire ou elliptique, les formes à angle droit, les formes en U et les formes en V, lesdits éléments gravés en sillons du troisième ensemble ayant une profondeur entre environ 20 $\mu$m et environ 50 $\mu$m, de préférence entre environ 25 $\mu$m et environ 45 $\mu$m, à condition que les éléments gravés en sillons du premier, du deuxième et du troisième ensemble aient des profondeurs différant d'au moins 20 % de la profondeur des éléments gravés en sillons du premier ensemble.

**11.** Attribut ou motif de sécurité imprimé selon l'un quelconque du procédé défini dans l'une quelconque des revendications 6 à 10.

**12.** Attribut ou motif de sécurité selon la revendication 11, l'attribut ou motif de sécurité en taille-douce comprenant une mosaïque d'au moins trois zones adjacentes, de préférence entremêlées ou alternées, par surface de 1 cm$^2$, lesdites au moins trois zones ayant des paramètres d'indice de couleur CIE (1976) différents **caractérisés par** leur différence de couleur totale $\Delta E^*_{(Z)}$ et/ou différant par au moins un paramètre choisi dans le groupe constitué par des propriétés magnétiques, des propriétés d'absorption UV ou IR, des propriétés optiquement variables, des propriétés de polarisation de la lumière, des propriétés électroconductrices, des propriétés luminescentes et des combinaisons de celles-ci.

**13.** Document sécurisé comprenant l'attribut ou motif de sécurité en taille-douce défini dans l'une quelconque des revendications 11 ou 12.

**14.** Utilisation de la composition d'encre taille-douce définie dans l'une quelconque des revendications 1 à 5 pour l'impression taille-douce d'un attribut ou motif de sécurité en taille-douce à caractéristiques multiples, de préférence selon le procédé défini dans une des revendications 6 à 9, de manière à protéger un document sécurisé de préférence choisi dans le groupe constitué par les billets de banque, les documents d'identité, les chèques, les bons, les cartes de transaction, les timbres et les vignettes fiscales contre la contrefaçon ou la fraude.

**15.** Utilisation de l'attribut ou motif de sécurité selon l'une quelconque des revendications 11 ou 12 pour la protection d'un document sécurisé de préférence choisi dans le groupe constitué par les billets de banque, les documents d'identité, les chèques, les bons, les cartes de transaction, les timbres et les vignettes fiscales contre la contrefaçon ou la fraude.

## Figure 1

W

## Figure 2

a)     b)     c)     d)     e)

Figure 3

Figure 4

Figure 5

Figure 6

**Figure 7**

Figure 8

8a

8b

8c

**Figure 9**

Figure 10

10a

10b

10c

# EP 2 956 514 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7686341 B2
- EP 1790701 B2
- WO 2010115986 A2
- WO 2005090090 A1
- WO 2003103962 A1
- EP 2119527 A1
- US 5074914 A
- US 5997622 A
- US 6001161 A
- JP 2080470 A
- JP 62190272 A
- JP 63218766 A
- US 4705300 A
- US 4705356 A
- US 4721217 A
- US 5084351 A
- US 5214530 A
- US 5281480 A
- US 5383995 A
- US 5569535 A
- US 5571624 A
- US 4838648 A
- WO 02073250 A2
- EP 0686675 A1
- WO 0300801 A2
- US 6838166 B
- WO 2007131833 A2
- US 5211877 A
- US 5362315 A
- US 6423246 B
- EP 1213338 A1
- EP 1046692 A1
- EP 0601483 A1
- US 6565770 B
- WO 2008033059 A2
- WO 2008092522 A1
- WO 2009005733 A2
- US 7108742 B
- WO 2007060133 A2
- EP 1836002 B1
- EP 1021421 B1
- EP 1242391 B1
- WO 2008000755 A1
- EP 1790701 B1
- EP 2014729 A2
- WO 2009156400 A1
- EP 1260563 B1
- EP 1751240 B1
- WO 2011098583 A1
- WO 2009007988 A1
- EP 2125713 B1
- EP 0119425 B1
- WO 2012143820 A1
- EP 1987950 A2
- EP 0805957 B1

### Non-patent literature cited in the description

- *Advances in Color Science and Technology,* 2002, vol. 5 (1), 1-12
- A Basic Guide to Particle Characterization. Malvern Instruments Worldwide
- **T. ALLEN.** Particles Size Measurement. Chapman & Hall, 1997, vol. 1
- **TASSO BÄURLE et al.** Coloristik fur Lackanwendungen. 2012
- Chemistry & Technology of UV & EB Formulation for Coatings, Inks & Paints. John Wiley & Sons in association with SITA Technology Limited, 1997
- Photoinitiators for Free Radical Cationic and Anionic Polymerization. **J. V. CRIVELLO ; K. DIETLIKER.** Chemistry & Technology of UV & EB Formulation for Coatings, Inks & Paints. John Wiley & Sons in association with SITA Technology Limited, 1998, vol. III